# EUROPÄISCHE PATENTSCHRIFT

(11) **EP 2 618 649 B1**
(45) Veröffentlichungstag und Bekanntmachung des Hinweises auf die Patenterteilung: **06.11.2019**
(21) Anmeldenummer: 11760710.1
(22) Anmeldetag: 20.09.2011
(51) Int. Cl.: A01G 9/08, A01G 9/14

(54) **VORRICHTUNG ZUR AUFZUCHT VON PFLANZEN**
DEVICE FOR GROWING PLANTS
DISPOSITIF POUR LA CULTIVATION DES PLANTES

(30) Priorität: 23.09.2010 DE 202010013543 U
(43) Veröffentlichungstag der Anmeldung: 31.07.2013
(73) Patentinhaber: Horticoop B.V., 2665 ZJ Bleiswijk (NL); Daas, Kamal, 2662 AP Bergschenhoek (NL); DAAS, Talal, Naperville, IL 60565 (US)
(72) Erfinder: DAAS, Kamal, NL-2662 AP Bergschenhoek (NL); DAAS, Talal, 60565 Naperwille, Illinois (US); VAN DER DRIFT, Peter, NL-2665 ZJ Bleiswijk (NL)
(74) Vertreter: Herrmann, Uwe
(86) Internationale Anmeldenummer: PCT/EP2011/004696
(87) Internationale Veröffentlichungsnummer: WO 2012/038060

(56) Entgegenhaltungen:
- BE-A1- 832 334
- NL-A- 8 502 774
- US-A- 4 028 847

## Beschreibung

Die Erfindung betrifft eine Vorrichtung zur Aufzucht von Pflanzen.

Vorrichtungen zur kommerziellen Aufzucht von Pflanzen sind aus dem Stand der Technik bekannt. In bekannten derartigen Aufzuchtanlagen wird oft als nachteilig empfunden, dass der aus dem Wachstum der Pflanzen resultierende, steigende Platzbedarf der Pflanzen von vornherein beim Setzen beachtet werden muss, oder dass die Pflanzen später umgetopft werden müssen. Eine großflächige Ernte und Bewässerung ist ebenfalls mit einem Mehraufwand verbunden. Ferner ergibt sich bei Pflanzenkulturen oft das Problem der Übertragung von Ungeziefer oder Bakterien von einer Pflanze zur nächsten, was durch einen geringen Abstand der Pflanzen voneinander bedingt sein kann.

US2008/0086944A1 betrifft eine Vorrichtung mit Einheiten zur Aufnahme von Pflanzen, wobei die Einheiten mittels Verbindungsmittel miteinander verbunden sind. US2008/0066378A1 betrifft zusammenhängenden Verbund von Töpfen zum Heranziehen und Umsetzen von Keimlingen, in dem einzelne Töpfe durch Verbindungsstücke verbunden werden.

Es ist ein Ziel der vorliegenden Erfindung, eine unter diesen Gesichtspunkten verbesserte Vorrichtung zur Aufzucht von Pflanzen bereitzustellen.

Dieses Ziel wird mit einer Vorrichtung gemäß Anspruch 1 gelöst. Vorteilhafte Ausgestaltungen ergeben sich aus den Unteransprüchen.

Demgemäß ist die Erfindung auf eine Vorrichtung zur Aufzucht von Pflanzen mit wenigstens zwei in der Vorrichtung angeordneten Einheiten zur Aufnahme einer Pflanze gerichtet. Erfindungsgemäß sind diese beiden Einheiten in einer ersten Reihe angeordnet, wobei zumindest eine dieser beiden Einheiten relativ zu wenigstens einer weiteren Einheit der ersten Reihe und/oder den verbleibenden Teilen der Vorrichtung beweglich ist, sodass der Abstand dieser beweglichen Einheit zu wenigstens einer anderen Einheit der ersten Reihe veränderbar ist.

Die erfindungsgemäße Vorrichtung kann zur Aufzucht von Zier- oder Nutzpflanzen verwendet werden. Bevorzugte Beispiele umfassen Zierpflanzen wie Tulpen und/oder Nutzpflanzen wie Salate.

In einer Ausführungsform weist die Vorrichtung wenigstens zwei weitere in der Vorrichtung angeordnete Einheiten zur Aufnahme einer Pflanze auf, die in einer zweiten Reihe angeordnet sind, wobei zumindest eine dieser weiteren Einheiten relativ zu wenigstens einer Einheit der zweiten Reihe und/oder den verbleibenden Teilen der Vorrichtung beweglich ist, sodass der Abstand dieser beweglichen Einheit zu wenigstens einer anderen Einheit der zweiten Reihe veränderbar ist. Benachbarte Einheiten innerhalb der zweiten Reihe können keinen größeren Abstand als einen definierten Maximalabstand zueinander haben.

In einer weiteren Ausführungsform weist eine erfindungsgemäße Vorrichtung n weitere Reihen auf, wobei n eine ganze Zahl ≥ 1 ist. Bevorzugte Werte für n umfassen n ≥ 3, n ≥ 4 oder ≥ 5. Vorzugsweise umfassen alle Reihen dieser Ausführungsform wenigstens zwei in der jeweiligen Reihe angeordneten Einheiten zur Aufnahme einer Pflanze, wobei zumindest eine dieser beiden Einheiten relativ zu einer oder mehreren weiteren Einheiten der jeweiligen Reihe und/oder zum verbleibenden Teil der Vorrichtung beweglich ist, sodass deren Abstand zu wenigstens einer anderen Einheit der jeweiligen Reihe veränderbar ist.

In einer Ausführungsform weist eine Reihe einer erfindungsgemäßen Vorrichtung mindestens m Einheiten auf, wobei zumindest m-1 dieser Einheiten relativ zu weiteren Einheiten der jeweiligen Reihe bzw. zur Vorrichtung beweglich sind, sodass der Abstand der m-1 bzw. aller beweglichen Einheiten relativ zu allen anderen Einheiten der Reihe veränderbar ist. m ist dabei eine ganze Zahl ≥ 2. Bevorzugte Werte für m umfassen m ≥ 3, m ≥ 5 oder m ≥ 10.

In einer Ausführungsform können benachbarte Einheiten innerhalb einer, mehrerer oder aller Reihen keinen größeren Abstand als einen definierten Maximalabstand zueinander haben.

In einer Ausführungsform sind alle Reihen identisch ausgeführt.

In einer Ausführungsform weisen alle Reihen einer erfindungsgemäßen Vorrichtung eine identische Anzahl an Einheiten auf. In einer Ausführungsform weisen unterschiedliche Reihen einer erfindungsgemäßen Vorrichtung eine unterschiedliche Anzahl an Einheiten auf. In einer Ausführungsform weist bei parallelen Reihen jede zweite Reihe eine identische Anzahl an Einheiten auf.

In einer Ausführungsform weist eine bestimmte Anzahl an Reihen, vorzugsweise die halbe Anzahl der Reihen eine identische Anzahl an Einheiten auf. Die verbleibenden Reihen können ebenfalls eine untereinander identische Anzahl an Einheiten aufweisen.

In einer anderen Ausführungsform können sich einzelne Reihen in einem oder mehreren der im Zuge der nachstehenden Diskussion verschiedener Ausführungsformen beschriebenen Merkmale unterscheiden. In einer Ausführungsform ist etwa eine bestimmte Anzahl an Reihen, vorzugsweise die halbe Anzahl der Reihen identisch ausgeführt. Die verbleibenden Reihen können ebenfalls identisch zueinander ausgeführt sein.

In einer Ausführungsform sind die beweglichen Einheiten einer bzw. jeder Reihe in einer vorzugsweise horizontalen Ebene der Vorrichtung entlang einer geraden oder gekrümmten Linie verschiebbar. Grundsätzlich wird im Regelfall eine gerade Linie bevorzugt sein. Sollte die Vorrichtung jedoch aus anordnungstechnischen Gründen vorzugsweise gekrümmt geformt sein, sind auch Bewegungen entlang einer gekrümmten Linie in einer vorzugsweise horizontalen Ebene zweckmäßig. Die Bewegung sollte dabei grundsätzlich einen Freiheitsgrad haben, das heißt nur in eine Richtung erfolgen. Die mögliche Bewegung der Einheiten kann streng auf diesen einen Freiheitsgrad beschränkt sein, beispielsweise durch Bewegung in einer Führung. Es ist aber auch denkbar, dass die Bewegung im Wesentlichen entlang einer Linie verläuft, jedoch einen vorzugsweise geringen Spielraum, beispielsweise weniger als 5 cm und bevorzugt weniger als 1 cm in Normalrichtung zu der Linie aufweist.

In einer Ausführungsform sind die Linien, die die Bewegungsrichtung der Einheiten in der angesprochenen Ebene der Vorrichtung definieren, von gegebenenfalls vorhandenen mehreren Reihen wenigstens abschnittsweise parallel.

In einer Ausführungsform ist bei wenigstens abschnittsweise parallelen Reihen jede zweite Reihe identisch ausgeführt.

In einer Ausführungsform sind die bzw. alle beweglichen Einheiten einer Reihe entlang einem gemeinsamen geraden oder gekrümmten Linearlager angeordnet. Gemeinsam bedeutet in diesem Zusammenhang, dass die bzw. alle Einheiten einer Reihe an dem selben Linearlager angeordnet sind. Vorzugsweise handelt es sich dabei um eine Gleitführung mit einer und vorzugsweise zwei Schienen. Ein Linearlager wird zum Führen einer geradlinigen Bewegung zwischen zwei Körpern benützt. Der Freiheitsgrad ist eins. Neben einer Gleitführung, welches die einfachste und häufigste Art eines Linearlagers darstellt, sind auch lineare Wälzführungen und dergleichen zweckmäßig.

In einer Ausführungsform weist die erfindungsgemäße Vorrichtung wenigstens abschnittsweise mehrere nebeneinander liegende und parallele Führungen auf.

In einer Ausführungsform stellt ein einziges Bauteil wenigstens abschnittsweise die Führungen zweier benachbarter Reihen dar. Der Begriff "wenigstens abschnittsweise" ist, hier und in jedem anderen Zusammenhang innerhalb dieser Anmeldung, auf Abschnitte entlang der Bewegungsrichtung der Einheiten gerichtet.

In einer Ausführungsform weist die Vorrichtung wenigstens zwei aneinander angrenzende Abschnitte entlang dem Verlauf der Reihen auf, wobei im ersten Abschnitt wenigstens zwei und vorzugsweise alle Reihen parallel zueinander verlaufen, und wobei sich im zweiten Abschnitt der Abstand wenigstens zweier Reihen zueinander verändert, vorzugsweise vergrößert, und weiter vorzugsweise verdoppelt. Dabei kann sich die Anzahl der Reihen beim Übergang vom ersten zum zweiten Abschnitt reduzieren, vorzugsweise halbieren. In diesem Zusammenhang kann vorgesehen sein, dass ein Teil, vorzugsweise die Hälfte der Reihen, welche die Vorrichtung im ersten Abschnitt aufweist, beim Übergang vom ersten zum zweiten Abschnitt endet. Der verbleibende Teil, vorzugsweise die verbleibende Hälfte der Reihen kann sich im zweiten Abschnitt fortsetzen, wobei sich der Verlauf dieser Reihen (im Sinne von Richtung der Reihen) im zweiten Abschnitt zum Zwecke der Veränderung des Abstandes im Vergleich zum Verlauf dieser Reihen im ersten Abschnitt ändert. In diesem Zusammenhang verlaufen die verbleibenden Reihen im zweiten Abschnitt in einer Ausführungsform nicht parallel zueinander, sondern spreizen sich voneinander ab. In einer weiteren Ausführungsform ist ein paralleler Verlauf der verbleibenden Reihen im zweiten Abschnitt vorgesehen, wobei dieser Verlauf jedoch schräg zum Verlauf der selben Reihen im ersten Abschnitt ist.

In einer weiteren Ausführungsform weist die Vorrichtung wenigstens drei aneinander angrenzende Abschnitte entlang dem Verlauf der Reihen auf, und wobei der dritte Abschnitt eine im Vergleich zum ersten Abschnitt reduzierte, vorzugsweise halbierte Anzahl an Reihen aufweist, die vorzugsweise parallel zueinander verlaufen. So kann vorgesehen sein, dass mehrere Reihen im dritten Abschnitt wieder parallel verlaufen, jedoch einen größerem Abstand zueinander haben als die Reihen im ersten Abschnitt. Da der dritte Abschnitt weniger Reihen aufweist als der erste Abschnitt, kann in einer Ausführungsform die Breite der Vorrichtung trotz des vergrößerten Abstandes der Reihen zueinander im ersten und zweiten und/oder dritten Abschnitt konstant sein.

In einer Ausführungsform kann die Vorrichtung originär nur ersten Abschnitt aufweisen und um den zweiten und dritten Abschnitt erweiterbar sein.

Diese Ausgestaltungen können vorteilhaft sein, um die Vorrichtung besser auf den sich vergrößernden Platzbedarf einer Pflanze mit fortlaufendem Wachstum einzustellen. So können, wenn die Pflanzen eine gewisse Größe erreicht haben, beispielsweise die Einheiten jeder zweiten Reihe des ersten Abschnitts in den dritten Abschnitt gezogen werden, sodass jede einzelne Pflanze sowohl im ersten Abschnitt (durch Entleeren der Hälfte der Reihen) als auch im dritten Abschnitt (durch den größeren Abstand der Reihen zueinander) mehr Platz zur Verfügung steht.

In einer Ausführungsform ist eine erste Position und/oder eine zweite Position und/oder eine dritte Position von wenigstens zwei, vorzugsweise mehreren und besonders bevorzugt allen Einheiten innerhalb einer, mehrerer oder aller Reihen bestimmbar bzw. definierbar und/oder veränderbar. Als Synonym für die erste Position kann auch der Begriff Anfangsposition verwendet werden, den die Einheiten in einem ersten Zustand der Vorrichtung einnehmen können. In der ersten Position liegen benachbarte Einheiten innerhalb einer Reihe näher aneinander als in der zweiten Position. Unter der dritten Position ist eine Konfiguration zu verstehen, in der sich ein Teil der Einheiten der Vorrichtung im dritten Abschnitt befindet.

In einer Ausführungsform ist eine erste und/oder eine zweite Position und/oder eine dritte Position einer oder mehrerer Einheiten durch ein Fixierungsmittel wie einen Stopper oder einen Endpunkt vorzugsweise in einer Führung oder an anderer Stelle der Vorrichtung definiert, wobei es sich bei dieser Führung um das im Zusammenhang mit den voranstehend beschriebenen Ausführungsformen diskutierte Linearlager oder um eine weitere, separate Führung handeln kann. Diese Führung kann unmittelbar oder mittelbar, beispielsweise durch einen Stab mit einer oder mehreren Einheiten in Verbindung stehen.

In einer Ausführungsform können sich benachbarte Einheiten innerhalb einer Reihe, gegebenenfalls in der ersten Position auch berühren. Dies ermöglicht eine gute Platzausnützung innerhalb der Vorrichtung beim Ansetzen und in der ersten Wachstumsphase der Pflanzen. Unter Berühren ist zu verstehen, dass die Einheiten aneinander anliegen. Sollten die Einheiten eine rechteckige bzw. quadratische Grundfläche haben, kann berühren heißen, dass sich benachbarte Einheiten jeweils eine aneinander liegende Kante teilen.

In einer Ausführungsform sind alle zu einer Reihe gehörigen Einheiten relativ zur Vorrichtung beweglich.

In einer anderen Ausführungsform ist eine einzige Einheit einer Reihe relativ zur Vorrichtung nicht beweglich und alle übrigen Einheiten dieser Reihe sind relativ zur Vorrichtung beweglich. Bei der relativ zur Vorrichtung nicht beweglichen Einheit handelt es sich vorzugsweise um eine endständige Einheit der betreffenden Reihe mit nur einer benachbarten Einheit innerhalb der selben Reihe. In diesem Fall können die verbleibenden Einheiten der Reihe in einer Richtung von der fixierten Einheit abgespreizt werden. Es kann sich aber auch um eine mittig in der Reihe angeordnete Einheit der betreffenden Reihe mit zwei benachbarten Einheiten innerhalb der selben Reihe handeln. In diesem Fall können die verbleibenden Einheiten der Reihe diesseits und jenseits der fixierten Einheit in gegenläufige Richtungen abgespreizt werden.

In einer Ausführungsform ist in einer bestimmten Anzahl von Reihen, vorzugsweise der halben Anzahl von Reihen eine einzige Einheit der Reihe relativ zur Vorrichtung nicht beweglich und alle übrigen Einheiten der Reihe sind relativ zur Vorrichtung beweglich. In den verbleibenden Reihen können alle zur Reihe gehörigen Einheiten relativ zur Vorrichtung beweglich sein.

In einer Ausführungsform ist bei parallelen Reihen an jeder zweiten Reihe eine einzige Einheit der Reihe relativ zur Vorrichtung nicht beweglich und alle übrigen Einheiten der Reihe sind relativ zur Vorrichtung beweglich. An den dazwischenliegenden Reihen sind alle zur Reihe gehörigen Einheiten relativ zur Vorrichtung beweglich.

Vorzugsweise umfasst die Vorrichtung zwei oder mehr als zwei, vorzugsweise wenigstens abschnittsweise parallel zueinander verlaufende Reihen von Einheiten.

Denkbar ist es, dass die Einheiten wenigstens zweier benachbarter Reihen im auseinander gezogenen Zustand, d.h. in der zweiten Position nicht nebeneinander liegen, wenngleich auch eine solche Ausführungsform von der Erfindung umfasst ist, sondern zueinander versetzt sind. Ein maximaler Versatz ergibt sich, wenn die Einheit einer Reihe zwischen zwei hintereinander liegenden Einheiten der benachbarten oder beider benachbarter Reihen so angeordnet ist, dass der Abstand der Einheit der einen Reihe zu den zwei hintereinanderliegenden Einheiten der benachbarten Reihe(n) identisch ist. Jedoch ist auch ein davon abweichender Versatz denkbar, etwa dahingehend, dass die Einheit einer Reihe zu einer von zwei hintereinanderliegenden Einheiten der benachbarten Reihe(n) größer ist als zu der anderen.

In einer Ausführungsform kann die zweite Position von wenigstens zwei, vorzugsweise mehreren und besonders bevorzugt allen Einheiten wenigstens zweier benachbarter, vorzugsweise mehrerer und besonders bevorzugt aller Reihen so definiert oder definierbar sein, dass die Einheiten zweier benachbarter Reihen entlang der Bewegungsrichtung versetzt sind. Ein bevorzugter Versatz umfasst die Hälfte eines definierten Maximalabstandes zweier Einheiten innerhalb einer Reihe zueinander.

Durch einen derartigen Versatz ergibt sich beispielsweise ein maximaler Abstand von Einheiten benachbarter Reihen und eine gleichmäßige Verteilung der Einheiten über die Vorrichtung. So ist die Platzausnützung optimal, indem einzelne Einheiten gemessen an der Größe der Vorrichtung viel Platz zur Verfügung haben und einen großen Abstand zueinander haben. Die Übertragung von Schädlingen, Pilzen oder Bakterien von einer Pflanze auf die nächste ist erschwert.

In einer Ausführungsform kann die dritte Position von wenigstens zwei, vorzugsweise mehreren und besonders bevorzugt allen Einheiten wenigstens zweier benachbarter, vorzugsweise mehrerer und besonders bevorzugt aller Reihen so definiert oder definierbar sein, dass sich von den Einheiten zweier benachbarter Reihen die Einheiten einer Reihe im ersten Abschnitt und die Einheiten der anderen Reihe im dritten Abschnitt befinden. Dadurch ergibt sich, wie bereits oben näher ausgeführt, eine weitere Vergrößerung des Abstandes zwischen den Einheiten innerhalb der Vorrichtung im Vergleich zur zweiten Position, wodurch den in der Vorrichtung aufgezogenen Pflanzen in fortgeschrittenen Stadien der Aufzucht genügend Platz zur Verfügung stehen kann.

Die Einheiten zur Aufnahme einer Pflanze sind vorzugsweise horizontal in der Vorrichtung angeordnet und können im Grundriss jede beliebige Form annehmen. Bevorzugt sind ein rechteckiger oder quadratischer Grundriss. Im Zentrum kann eine Öffnung oder ein Aufnahmebereich für die Pflanze bzw. ein die Pflanze und Substrat umgebendes Behältnis vorhanden sein, wobei diese Öffnung oder dieser Aufnahmebereich gegebenenfalls keinen Boden innerhalb der Einheit aufweisen und diesen von oben nach unten durchdringen.

Die Größe des Versatzes kann durch Mittel vorgegeben sein, die die weitere Bewegung der Einheiten verhindern, wie beispielweise durch Blockierungen oder dergleichen oder auch durch die Länge von Verbindungselementen, die zwei hintereinander liegende Elemente einer Reihe verbinden.

In einer Ausführungsform können die Einheiten zur Aufnahme einer Pflanze eine Ausnehmung zur Aufnahme einer Pflanze samt Substrat oder eine gegebenenfalls in einer Ausnehmung befindlichen oder als Ausnehmung ausgebildete Halterung für ein Pflanzenbehältnis, insbesondere einen Blumentopf aufweisen.

In einer Ausführungsform können die Einheiten zur Aufnahme einer Pflanze eine gegebenenfalls in einer Ausnehmung befindlichen oder als Ausnehmung ausgebildete Halterung für die Pflanze oder die Wurzeln der Pflanze ohne ein Substrat oder ohne ein die Pflanze und Substrat umgebendes Behältnis.

In einer Ausführungsform weist eine erfindungsgemäße Vorrichtung unterhalb der Einheiten zur Aufnahme einer Pflanze einer Reihe, mehrerer Reihen oder aller Reihen einen Aufnahmebereich für ein Substrat und/oder ein Nährmedium auf. Der Aufnahmebereich bzw. das darin vorhandene Substrat oder Nährmedium kann von den Pflanzen verschiedener Einheiten einer Reihe geteilt werden. Es ist auch denkbar, dass das Substrat oder Nährmedium von Einheiten mehrerer oder aller Reihen geteilt wird. Das Nährmedium kann gegebenenfalls mit Nährstoffen angereichertes Wasser sein.

Eine bevorzugte Anbauart von Pflanzen unter Verwendung einer erfindungsgemäßen Vorrichtung in dieser Ausführungsform ist eine Hydrokultur. Dort können die Wurzeln bei Bewegung einer Einheit oder Mehraufwand oder einer potentiellen Beschädigung der Pflanze bei Bewegung einer Einheit in einem Nährmedium verschoben werden.

In einer Ausführungsform sind die Einheiten schwimmend auf einem Nährmedium bzw. Substrat angeordnet.

In einer anderen Ausführungsform fehlt ein derartiger Aufnahmebereich.

Ein getrenntes Nährmedium und/oder Substrat für die Einheiten einer Reihe oder für jede einzelne Einheit kann den Vorteil haben, dass Bakterien oder Pilze an den Wurzeln der Pflanzen sich nicht von einer Reihe bzw. Einheit in die nächste ausbreiten.

In einer Ausführungsform weist die Vorrichtung zwischen benachbarten Einheiten einer Reihe eine Abdeckung auf. Alternativ kann zwischen benachbarten Einheiten einer Reihe eine Abdeckung einfügbar sein. Die Abdeckung überlagert den Zwischenraum zwischen den Einheiten, wenn diese zueinander beabstandet sind. Dies hat den Zweck, dass nach dem Auseinanderziehen der Reihen das Substrat bzw. Nährmedium unterhalb der Ebene der Einheiten abgedeckt und damit vor Einflüssen von außen geschützt ist. Die Abdeckung kann entweder fest mit beiden Einheiten verbunden sein, oder die Einheiten können eine Aufnahme aufweisen, an der die Abdeckung befestigt werden kann. Die Abdeckung ist vorzugsweise elastisch und planenförmig oder starr und plattenförmig und kann zur Anpassung Ihrer Fläche an den veränderbaren Abstand zwischen benachbarten Einheiten faltbar und/oder teleskopierbar sein.

In einer Ausführungsform weist eine erfindungsgemäße Vorrichtung zwischen wenigstens zwei, vorzugsweise mehreren und besonders bevorzugt allen benachbarten Einheiten innerhalb einer, mehrerer oder aller Reihen ein Federmittel auf, welches benachbarte Einheiten voneinander abstößt. Diese Abstoßung kann das Erreichen eines definierten Maximalabstandes begünstigen. Geeignete Federmittel umfassen beispielsweise eine Stahlfeder.

In einer Ausführungsform weist die Vorrichtung wenigstens einen lösbaren Sperrmechanismus auf, der der Abstand zwischen wenigstens zwei, vorzugsweise mehreren und besonders bevorzugt allen benachbarten Einheiten innerhalb einer, mehrerer oder aller Reihen kleiner als einen definierten Maximalabstand halten kann. Geeignete Sperrmittel umfassen ein Blockierelement an den Schienen oder ein Hindernis in der definierten Bewegungsrichtung der Einheiten.

In einer Ausführungsform weist die Vorrichtung ein Betätigungsmittel auf, mit dem der Abstand von wenigstens zwei, vorzugsweise mehreren und besonders bevorzugt allen Einheiten innerhalb einer, mehrerer oder aller Reihen gleichzeitig oder nacheinander veränderbar ist. Geeignete Betätigungsmittel umfassen eine unmittelbar oder mittelbar, beispielsweise über einen Strick oder eine Stange mittelbar mit endständigen Einheiten einer, mehrerer oder aller Reihen verbundene Griffe, oder ein Mittel zum Lösen eines im Zusammenhang mit der vorangehenden Ausführungsform beschriebenen Sperrmechanismus. Auch eine mechanische oder elektrische Steuereinheit ist geeignet, um den Abstand zu verändern.

Denkbar ist es, dass durch eine einzige Betätigungseinrichtung, die Einheiten mehrerer oder aller Reihen in die gewünschte Position bewegt werden.

In einer Ausführungsform sind alle oder mehrere benachbarte Einheiten innerhalb einer Reihe der erfindungsgemäßen Vorrichtung verbunden. Die Mittel zur Verbindung benachbarter Einheiten innerhalb einer Reihe sind dabei so beschaffen, dass der Abstand der Einheiten trotz der Verbindung veränderbar ist. Geeignete Mittel umfassen eine Schnur, einen Strick, einen Draht, durch Achsen miteinander verbundene, faltbare und starre Glieder (ähnlich einem Meterstab), eine teleskopisch ausfahrbare Stange oder eine einfache Stange, die an zumindest einer der verbundenen Einheiten verschiebbar aufgenommen ist.

In einer Ausführungsform sind zwei Einheiten durch ein Verbindungsmittel verbunden. In einer anderen Ausführungsform sind zwei Einheiten durch zwei Mittel zur Verbindung benachbarter Einheiten verbunden.

In einer Ausführungsform ist eine erste und/oder eine zweite Position der Einheiten durch die Verbindungsmittel definiert.

In einer Ausführungsform ist ein Maximalabstand zweier benachbarter Einheiten einer Reihe an dem Mittel zur Verbindung dieser Einheiten vorzugsweise reversibel einstellbar. Dabei kann es sich bei dem Mittel oder den Mitteln zur Verbindung benachbarter Einheiten, oder wenn mehrere Mittel zwei benachbarte Einheiten verbinden bei zumindest einem der beiden Mittel um ein längenverstellbares Element handelt. Bei durch Achsen miteinander verbundenen, zusammenfaltbaren und starren Gliedern kann beispielsweise ein Maximalwinkel zwischen einzelnen Gliedern eingestellt werden. Bei einer teleskopisch ausfahrbaren Stange kann die Maximallänge durch Begrenzung der Ausfahrbarkeit eingestellt werden. Bei einer einfachen Stange kann die Position eines Stoppers verändert werden, der bestimmt wie weit die Stange aus einem Aufnahmebereich einer Einheit herausgefahren werden kann.

In einer Ausführungsform sind ein Verbindungsmittel, ein Paar an Verbindungsmitteln oder mehrere Verbindungsmittel permanent und/oder fest und/oder integral mit einer, zwei benachbarten oder mehreren Einheiten verbunden.

In einer Ausführungsform weisen die Einheiten einen Aufnahmebereich für die Mittel zur Verbindung benachbarter Einheiten auf, der gegebenenfalls durch einen vertikal von den Einheiten abstehenden Fortsatz gebildet wird. Die Mittel zur Verbindung können lösbar an diesem Aufnahmebereich befestigt sein.

In einer Ausführungsform sind die Mittel zur Verbindung zweier benachbarter Einheiten einer Reihe in wenigstens einer oder beiden Einheiten zumindest teilweise aufnehmbar. Mit anderen Worten umfasst eine Einheit einen Aufnahmebereich für das Verbindungsmittel. So kann im Falle der Verwendung einer gegebenenfalls teleskopartig ausfahrbaren Stange als Mittel zur Verbindung zweier benachbarter Einheiten diese in einer Ausnehmung in einem oder beiden benachbarten Einheiten aufgenommen werden, wenn diese weniger als den Maximalabstand zueinander haben. Die Aufnahmebereiche für das Verbindungsmittel sind vorzugsweise so angeordnet, dass dieser mit einer gegebenenfalls vorhandenen Ausnehmung zur Aufnahme der Pflanze in den Einheiten nicht überlappt.

In einer Ausführungsform sind alle Mittel zur Verbindung bei benachbarten Einheiten einer Reihe innerhalb der Reihe identisch. In einer Ausführungsform sind alle Mittel zur Verbindung zweier benachbarter Einheiten in der gesamten Vorrichtung identisch.

In einer Ausführungsform weist die Vorrichtung einen Betätigungsmechanismus auf, mit dem die Position aller Einheiten innerhalb wenigstens einer Reihe, oder auch die Position aller Einheiten innerhalb mehrerer Reihen veränderbar und bestimmbar ist. So kann beispielsweise vorgesehen sein, dass mit Hilfe des Betätigungsmechanismus die Einheiten innerhalb einer Reihe von einem Zustand, in dem benachbarte Einheiten aneinander anliegen, in einen Zustand, in dem benachbarte Einheiten zueinander den Maximalabstand einnehmen, überführt werden können. Ferner kann beispielsweise vorgesehen sein, dass mit Hilfe des Betätigungsmechanismus die Einheiten der Vorrichtung von einer ersten Position (wie oben definiert) in eine zweite Position (wie oben definiert) und in eine dritte Position (wie oben definiert) überführt werden können. Der Betätigungsmechanismus kann mechanisch oder elektrisch ausgeführt sein. Ein Beispiel umfasst eine Rolle, auf der eine als Verbindungsmittel fungierende Schnur aufgewickelt werden kann, und die mit Hilfe einer manuell oder elektrisch betätigbaren Kurbel ansteuerbar ist.

Weitere Einzelheiten und Vorteile der Erfindung ergeben sich aus den im Zusammenhang mit den Figuren beschriebenen Ausführungsbeispielen. In den Figuren zeigen:
- Figur 1:: eine Ausführungsform einer erfindungsgemäßen Vorrichtung,
- Figur 2:: eine weitere Ausführungsform einer erfindungsgemäßen Vorrichtung,
- Figur 3:: eine Detailansicht einer Ausführungsform von zwei Einheiten einer Reihe einer erfindungsgemäßen Vorrichtung in einer ersten Position zueinander,
- Figur 4:: die in Fig. 3 gezeigten Einheiten in einer zweiten Position zueinander,
- Figur 5:: eine Detailansicht einer weiteren Ausführungsform von zwei Einheiten einer Reihe einer erfindungsgemäßen Vorrichtung,
- Figur 6:: eine Detailansicht einer weiteren Ausführungsform von zwei Einheiten einer Reihe einer erfindungsgemäßen Vorrichtung,
- Figur 7:: eine weitere Ausführungsform einer Einheit einer erfindungsgemäßen Vorrichtung,
- Figur 8:: zwei der in Figur 7 dargestellten Einheiten, welche innerhalb einer Reihe angeordnet und mit einem Strick verbunden sind,
- Figur 9:: einen Betätigungsmechanismus mit dem die Position mehrerer Einheiten innerhalb einer Reihe veränderbar ist,
- Figur 10:: drei voneinander beabstandete Einheiten einer Reihe einer erfindungsgemäßen Vorrichtung, wobei der Zwischenraum zwischen benachbarten Einheiten durch eine Abdeckung abgedeckt wird,
- Figur 11:: eine Detailansicht der in Figur 10 dargestellten Abdeckung,
- Figur 12:: die in Figur 10 dargestellten Einheiten, aufgenommen in der Führung einer Reihe,
- Figur 13:: eine Ausführungsform der erfindungsgemäßen Vorrichtung, wobei die Vorrichtung in drei Abschnitte unterteilt ist, und
- Figur 14:: eine weitere Ausführungsform der erfindungsgemäßen Vorrichtung, wobei die Vorrichtung in drei Abschnitte unterteilt ist.

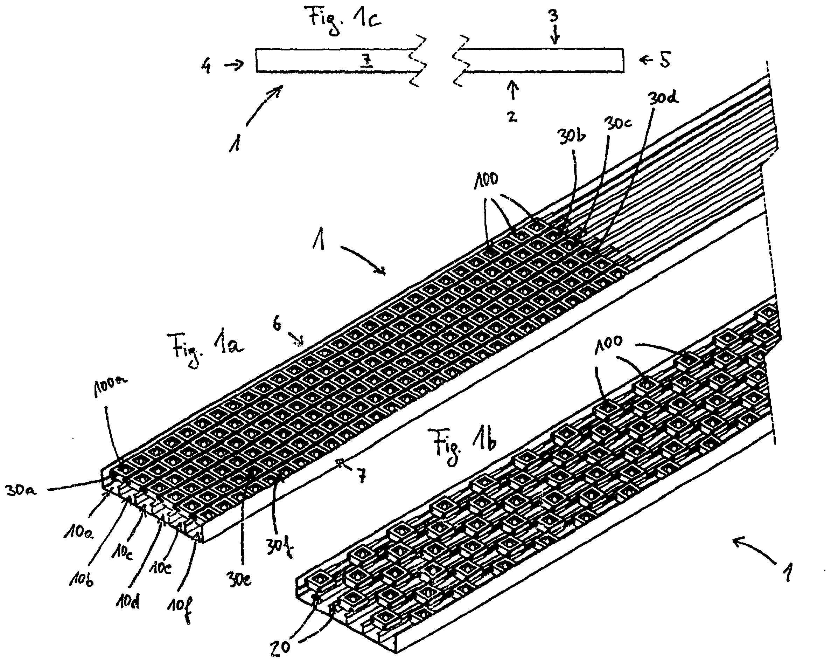

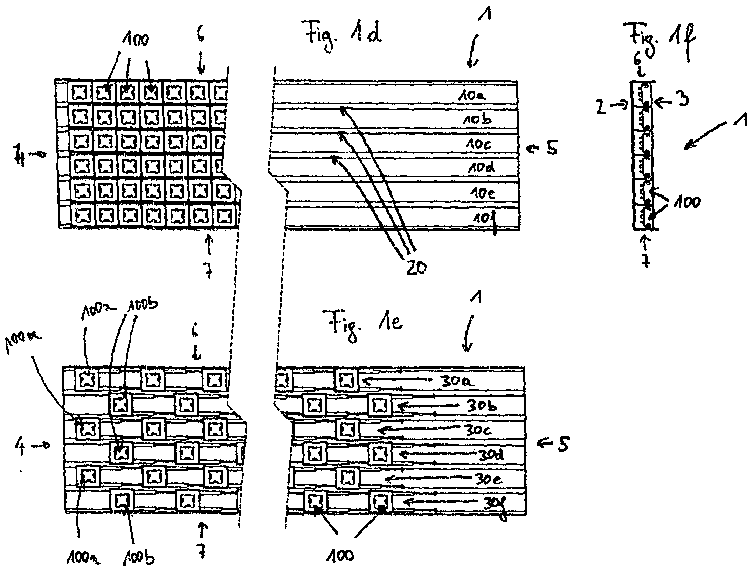

Figur 1 zeigt eine Ausführungsform einer erfindungsgemäßen Vorrichtung 1.

Figur 1a zeigt eine perspektivische Ansicht dieser Ausführungsform, wobei die Einheiten 100 der Vorrichtung 1 in einer ersten Position zueinander stehen. Figur 1b zeigt eine perspektivische Ansicht dieser Ausführungsform, wobei die Einheiten 100 der Vorrichtung 1 in einer zweiten Position zueinander stehen. Figur 1c zeigt eine Seitenansicht dieser Ausführungsform. Figur 1d zeigt eine Draufsicht dieser Ausführungsform, wobei die Einheiten 100 der Vorrichtung 1 in einer ersten Position zueinander stehen. Figur 1e zeigt eine Draufsicht dieser Ausführungsform, wobei die Einheiten 100 der Vorrichtung 1 in einer zweiten Position zueinander stehen. Figur 1f zeigt eine Frontalansicht dieser Ausführungsform.

Die Vorrichtung 1 weist eine Unterseite 2, eine Oberseite 3, eine Vorderseite 4, eine Rückseite 5, eine linke Seite 6 sowie eine rechte Seite 7 auf. Die Vorrichtung ist länglich und flach ausgeführt, in Form eines Brettes. Dabei ist die Höhe, das heißt die Distanz von Unterseite 2 zu Oberseite 3 im Verhältnis zur Breite, das heißt zur Distanz von linker Seite 6 zu rechter Seite 7 klein. Die Breite ist wiederum im Verhältnis zur Länge, das heißt zur Distanz zwischen Vorderseite 4 und Rückseite 5 klein.

Die Vorrichtung weist mehrere Bereiche bzw. Aufnahmebereiche 10a, 10b, 10c, 10d, 10e und 10f für ein Substrat, flüssiges Nährmedium oder Wasser auf, welche durch Leitschienen 20 voneinander getrennt sind. Diese Bereiche können auch leer sein und nur als Freiraum dienen um eine ungestörte Bewegung der Einheiten entlang der Leitschienen zu gewährleisten.

Zwischen den Leitschienen 20 und oberhalb der Aufnahmebereiche 10 sind mehrere parallel verlaufende Reihen 30a, 30b, 30c, 30d, 30e und 30f von Einheiten 100 zur Aufnahme von Pflanzen angebracht. Diese sind entlang der Längsachse der Vorrichtung 1, das heißt in Richtung von der Vorderseite 4 zur Rückseite 5 und umgekehrt der Vorrichtung 1 an den Schienen 20 verschiebbar.

In Figuren 1a und 1d sind die Einheiten 100 der Reihen 30 in einem ersten, kompaktem Zustand angeordnet. Dabei teilen sich die Einheiten 100 einer Reihe 30 eine gemeinsame Seitenkante. In diesem Zustand können Jungpflanzen bzw. Samen in einem kompakten Abschnitt der Vorrichtung 1 gepflanzt werden. Das Anpflanzen ist dadurch erleichtert, dass die einzelnen Setzpositionen eng aneinander liegen. Ferner kann der Einsatz eines Nährmediums bzw. Substrats auf diese Abschnitte der Aufnahmebereiche bzw. der Vorrichtung beschränkt werden, an denen tatsächlich Pflanzen vorhanden sind. Alternativ muss nur ein kleiner Bereich bewässert werden. Der in den Figuren rechte Bereich der Vorrichtung, in dem sich keine Einheiten 100 befinden, ist in diesem ersten Zustand der Vorrichtung nicht in Verwendung.

In Figuren 1b und 1e sind die Einheiten 100 der Reihen 30 in einem zweiten, offenen Zustand angeordnet. Dabei sind die Einheiten 100 innerhalb jeder Reihe 30 jeweils so weit auseinandergeschoben, dass sie den definierten Maximalabstand zueinander haben.

In den Reihen 30a, 30c und 30e ist dabei die Position der ersten Einheit 100a der Reihe im Verhältnis zu dem in Figuren 1a und 1d dargestellten ersten Zustand unverändert. Es ist denkbar, dass diese Einheiten 100a fest an der Vorrichtung 1 bzw. an den Schienen 20 befestigt sind. In den Reihen 30b, 30d und 30f ist die erste Einheit 100b im Verhältnis zu dem in Figuren 1a und 1d dargestellten ersten Zustand jeweils um den halben Maximalabstand zwischen den Einheiten einer Reihe von der Anfangsposition verschoben. Dabei handelt es sich jedoch nur um ein Beispiel. Selbstverständlich ist auch ein anderer Versatz denkbar.

Auch ist es möglich, dass der Versatz von Reihe zu Reihe nicht identisch ist, sondern variiert, sofern dies gewünscht ist.

In diesen Reihen sind somit alle Einheiten 100 in der Längsrichtung verschiebbar angeordnet. Die Einheiten benachbarter Reihen sind im zweiten Zustand so jeweils beispielsweise um den halben Maximalabstand versetzt angeordnet, wobei sich auch zwischen den Einheiten verschiedener Reihen ein maximaler Abstand ergibt. In dieser Ausführungsform sind die Einheiten 100 zum Ansetzen von Pflanzen und damit auch die Pflanzen nun mit maximalem Abstand gleichmäßig über die Vorrichtung verteilt. So ist die Platzausnützung optimal, indem einzelnen Pflanzen gemessen an der Größe der Vorrichtung den maximalen Platz zur Verfügung haben und den maximalen Abstand zueinander haben. Gegebenenfalls ist der Anteil einer Pflanze an einem gemeinsamen Substrat bzw. einer gemeinsamen Nährlösung gemessen an der Gesamtgröße der Vorrichtung maximal. Jedenfalls wird die Übertragung von Schädlingen, Pilzen oder Bakterien von einer Pflanze auf die nächste durch den großen Abstand der Pflanzen zueinander erschwert.

Die Vorrichtung kann durch einfaches Verschieben der Einheiten 100 entlang der Führungsschienen 20, beispielsweise durch Ziehen an den in den Figuren 1 rechts dargestellten, rückseitigen Enden der Reihen 30 von dem ersten Zustand in den zweiten Zustand gebracht werden. Im Falle eines gemeinsamen Nährmediums bzw. Substrates ist dieser Vorgang bei Verwendung einer Hydrokultur besonders einfach, da die losen Wurzeln nur in dem fluiden Nährmedium verschoben werden müssen. Im Falle getrennter Nährmedien, d.h. ein getrenntes Behältnis pro Einheit ist dieser Vorgang ebenfalls sehr einfach.

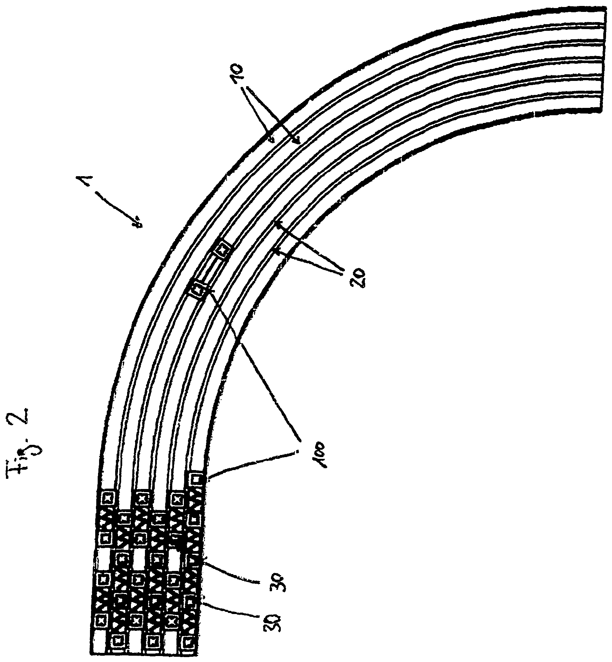

Figur 2 zeigt eine perspektivische Ansicht einer weiteren Ausführungsform in einer erfindungsgemäßen Vorrichtung 1. Diese ähnelt der in Figur 1 dargestellten Ausführungsform, jedoch sind die Bereiche 10, Schienen 20, Reihen 30 sowie die linken und rechten Seitenkanten der Vorrichtung hier nicht gerade sondern gekrümmt. Die Einheiten 100 werden so an gekrümmten, jedoch parallel zueinanderstehenden Bahnen 20 entlang der Vorrichtung verschoben, wobei die Verschiebung in der horizontalen Ebene der Vorrichtung erfolgt.

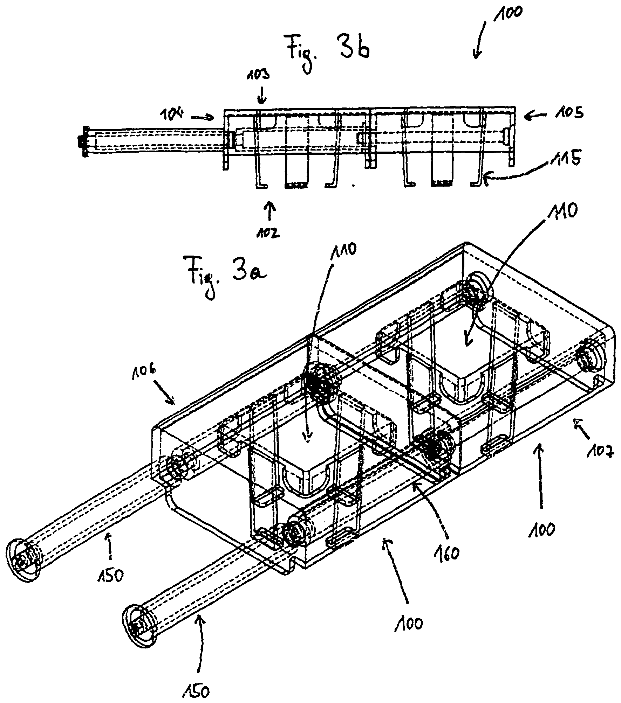

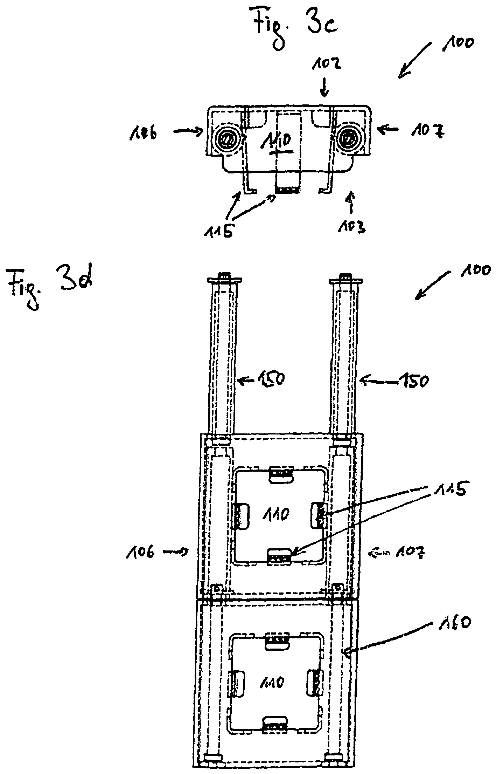

Figur 3 zeigt eine Detailansicht von zwei benachbarten Einheiten 100 einer Reihe 30 einer erfindungsgemäßen Vorrichtung 1. Die Detailansicht ist einer Vorrichtung 1 im in Figuren 1a und 1d dargestellten ersten Zustand entnommen, wobei sich diese Einheiten gegenseitig entlang einer Seitenkante berühren.

Figur 3a zeigt eine perspektivische Ansicht dieser beiden Einheiten. Figur 3b zeigt eine Seitenansicht dieser beiden Einheiten. Figur 3c zeigt eine Frontalansicht dieser beiden Einheiten. Figur 3d zeigt eine Draufsicht dieser beiden Einheiten.

Die Einheiten 100 haben eine Unterseite 103, eine Oberseite 102, eine Vorderseite 104, eine Rückseite 105, eine linke Seite 106 und eine rechte Seite 107. Die Einheiten sind im Grundriss quadratisch ausgeführt, das heißt die linke und rechte Seitenkante sowie die vordere und hintere Seitenkante sind jeweils gleich lang. Die Einheiten 100 sind flach ausgeführt, wobei die Höhe, das heißt der Abstand zwischen Unterseite 103 und Oberseite 102 geringer ist als die Seiten- bzw. Längenkanten.

In der Mitte der Einheiten (von oben aus gesehen) befindet sich ein Aufnahmebereich 110 für eine Pflanze bzw. für ein eine Pflanze beherbergendes Behältnis. So ist es denkbar, dass ein Blumentopf mit einem Substrat in der Aufnahmeeinheit aufgenommen ist. In den Aufnahmebereichen ist eine Halterung 115 für die Pflanze bzw. für ein eine Pflanze beherbergendes Behältnis angebracht. Die Halterung 115 steht über die Unterseite 103 der Einheiten hinaus.

Die Einheiten 100 sind mit Mitteln 150 zur Verbindung der Einheiten verbunden. Bei diesen Mitteln 150 handelt es sich um teleskopartig ausfahrbare Stäbe, die sich im eingefahrenen Zustand befinden. Zwei solche Mittel 150 zur Verbindung benachbarter Einheiten verbinden die beiden dargestellten Einheiten 100 miteinander.

Die Einheiten 100 weisen ferner Aufnahmebereiche 160 für die Teleskopstäbe auf, worin die Verbindungsmittel 150 aufgenommen werden können. Wie in Figur 3d deutlich zu erkennen ist, sind diese Aufnahmebereiche 160 jeweils links und rechts des Aufnahmebereiches 110 für die Pflanze bzw. für ein eine Pflanze beherbergendes Behältnis angebracht.

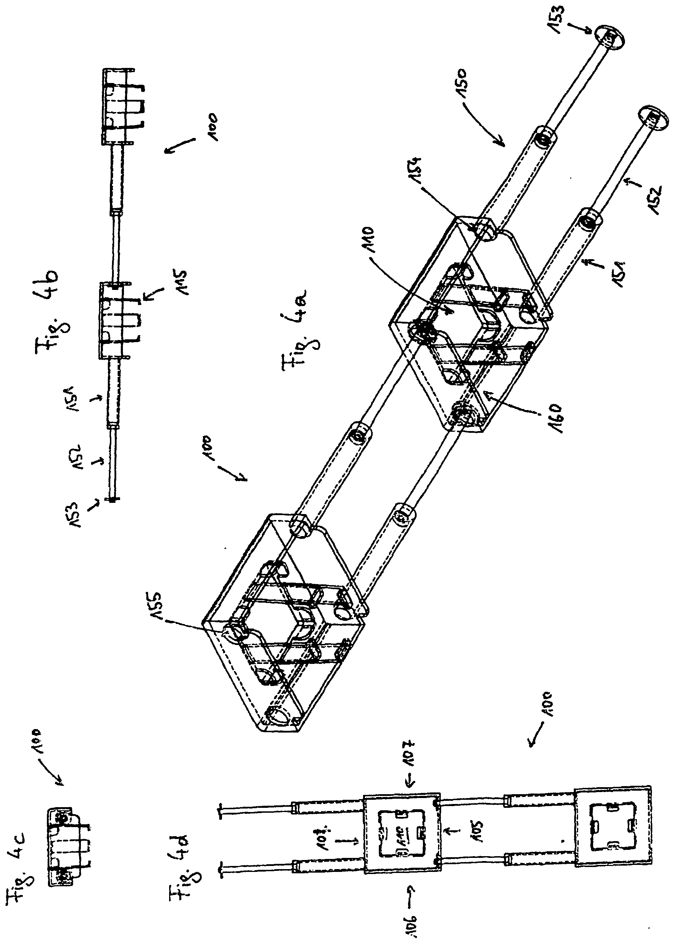

Figur 4 zeigt eine Detailansicht derselben beiden benachbarten Einheiten 100 wie Figur 3. Die Detailansicht ist einer Vorrichtung 1 im in Figuren 1b und 1e dargestellten zweiten Zustand entnommen, wobei die Einheiten beabstandet voneinander angeordnet sind.

Figur 4a zeigt eine perspektivische Ansicht dieser beiden Einheiten. Figur 4b zeigt eine Seitenansicht dieser beiden Einheiten. Figur 4c zeigt eine Frontalansicht dieser beiden Einheiten. Figur 4d zeigt eine Draufsicht dieser beiden Einheiten.

Bezüglich einer detaillierten Beschreibung der einzelnen Einheiten wird auch auf die Figurenbeschreibung von Figur 3 verwiesen.

Die Mittel 150, d.h. die teleskopartig ausfahrbare Stäbe zur Verbindung einzelner Einheiten 100 sind nun aus den Aufnahmebereichen 160 innerhalb der Einheiten 100 ausgefahren.

Es lässt sich gut erkennen, dass das Verbindungsmittel 150 mit einer der beiden benachbarten Einheiten am Ende 154 permanent und unbeweglich verbunden ist. An der gegenüberliegenden Seite der Verbindungsmittel 150 wird das völlige Lösen von den Aufnahmebereichen 160 einer benachbarten Einheit 100 bzw. von der benachbarten Einheit an sich durch Stopper 153 verhindert, welche in Figur 4 in Form von tellerartigen Endstücken dargestellt sind. Die teleskopartig ausfahrbaren Stangen weisen zwei Teilabschnitte 151 und 152 auf. Der Maximalabstand zwischen den Einheiten 110 wird entweder durch die Stellung des Stoppers an Teilabschnitt 152 oder durch den maximalen Hub der teleskopartigen Ausfahrbewegung definiert.

Wenn die Einheiten auseinanderbewegt werden, sodass die Vorrichtung 1 vom in Figuren 1a und 1d dargestellten ersten Zustand in den in Figuren 1b und 1e dargestellten zweiten Zustand übergehen, unterbleibt zunächst die teleskopartige Ausfahrbewegung und das gesamte Verbindungsmittel 150 wird aus dem Ausnahmebereich 160 der benachbarten Einheit herausgezogen. Wenn das gesamte Verbindungsmittel 150 herausgezogen ist, steht der Stopper 153 am Rahmen an der Rückseite 105 der benachbarten Einheit an. Nun startet die teleskopartige Ausfahrbewegung bis der Maximalabstand zwischen den Einheiten erreicht ist.

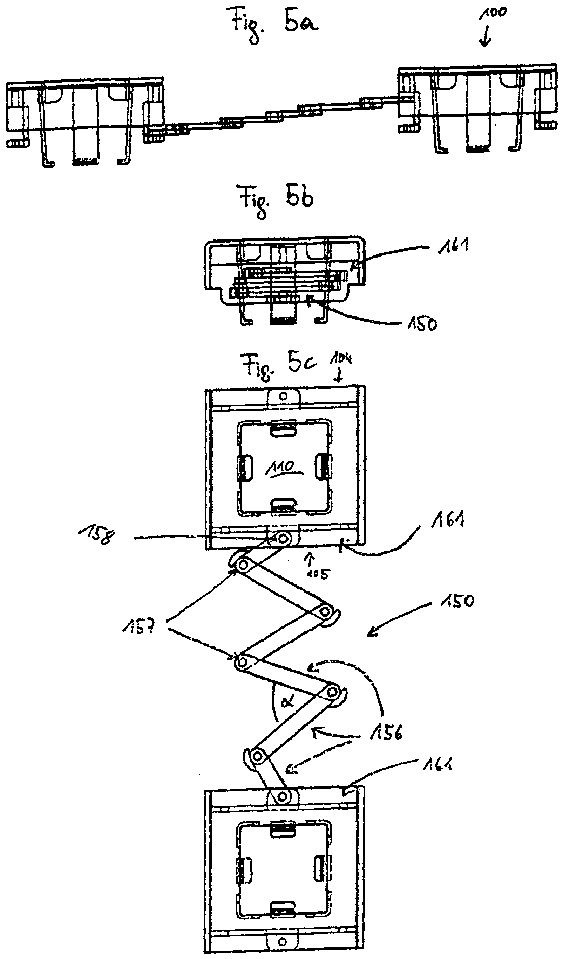

Figur 5 zeigt eine Detailansicht einer weiteren Ausführungsform zweier benachbarter Einheiten 100 einer Reihe 30 einer erfindungsgemäßen Vorrichtung 1 im zweiten Zustand.

Figur 5a zeigt eine Seitenansicht dieser beiden Einheiten. Figur 5b zeigt eine Frontalansicht dieser beiden Einheiten. Figur 5c zeigt eine Draufsicht dieser beiden Einheiten.

Die Struktur der einzelnen Einheiten 100 ähnelt der Struktur der im Zusammenhang mit Figur 3 beschriebenen Einheiten. Bezüglich einer detaillierten Beschreibung der einzelnen Einheiten wird daher auch auf die Figurenbeschreibung von Figur 3 verwiesen.

Abweichend von den in Figuren 3 und 4 gezeigten Ausführungsformen zweier benachbarter Einheiten sind die in Figur 5 dargestellten Einheiten durch ein solches Verbindungsmittel 150 miteinander verbunden, das sich aus mehreren an Achsen 157 schwenkbar miteinander verbundenen und faltbaren starren Gliedern 156 zusammensetzt. Zwischen zwei benachbarten Einheiten 100 ist nur ein derartiges Verbindungsmittel 150 vorhanden. Die endständigen Glieder 156 sind an Achsen 158 schwenkbar mit den zwei benachbarten Einheiten 100 verbunden.

Die Einheiten 100 weisen Aufnahmebereiche 161 für das Verbindungsmittel 150 auf, welche wie in Figur 5c besonders gut erkennbar an der vor und nach dem Aufnahmebereich 110 für eine Pflanze bzw. für ein eine Pflanze beherbergendes Behältnis in der Einheit 100 angeordnet sind.

Befindet sich die Vorrichtung 1 im in Figuren 1a und 1d dargestellten ersten Zustand, wobei sich die Einheiten 100 gegenseitig entlang der Vorder- bzw. Rückkante berühren, sind die Glieder 156 des Verbindungsmittels 150 zusammengefaltet und sind in den Aufnahmebereichen 161 aufgenommen.

Wenn die Einheiten auseinanderbewegt werden, sodass die Vorrichtung 1 vom in Figuren 1a und 1d dargestellten ersten Zustand in den in Figuren 1b und 1e dargestellten zweiten Zustand übergehen, werden die Glieder 156 auseinandergezogen, wobei diese an den Achsen 157 verschwenkt werden. Der Maximalabstand zwischen zwei Einheiten 100 kann durch die Summe der Längen aller Glieder 156 des Verbindungsmittels 150 definiert sein. Durch die Einstellung eines maximalen Winkels α zwischen den Gliedern ist jedoch auch die Definition eines kürzeren Maximalabstandes möglich.

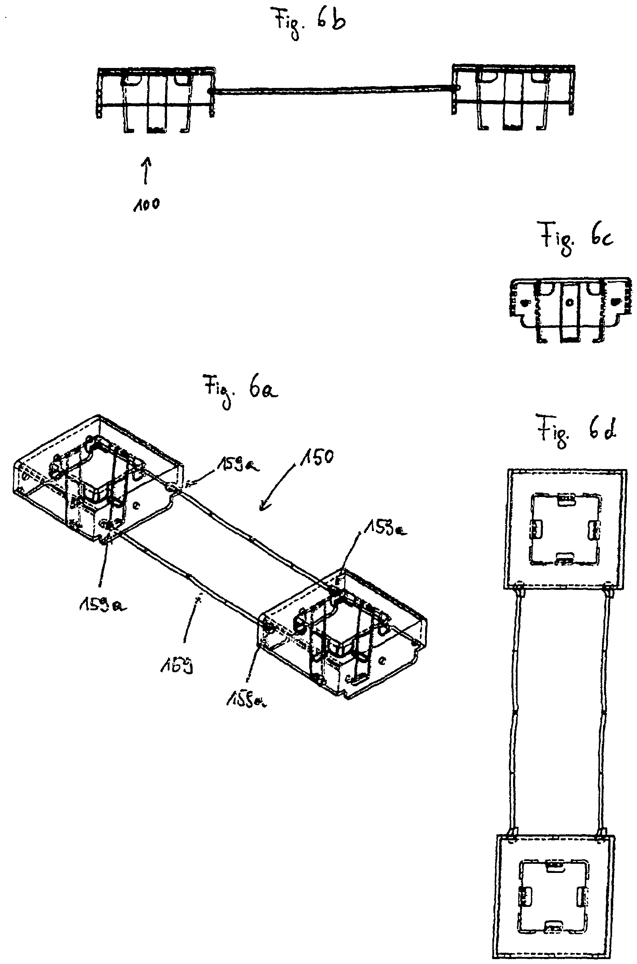

Figur 6 zeigt eine Detailansicht einer weiteren Ausführungsform zweier benachbarter Einheiten 100 einer Reihe 30 einer erfindungsgemäßen Vorrichtung 1 im zweiten Zustand.

Figur 6a zeigt eine perspektivische Ansicht dieser beiden Einheiten. Figur 6b zeigt eine Seitenansicht dieser beiden Einheiten. Figur 6c zeigt eine Frontalansicht dieser beiden Einheiten. Figur 6d zeigt eine Draufsicht dieser beiden Einheiten.

Die Struktur der einzelnen Einheiten 100 ähnelt der Struktur der im Zusammenhang mit Figur 3 beschriebenen Einheiten. Bezüglich einer detaillierten Beschreibung der einzelnen Einheiten wird daher auch auf die Figurenbeschreibung von Figur 3 verwiesen.

Zwischen den Einheiten sind jeweils zwei Mittel 150 zur Verbindung der Einheiten in Form einer Schnur 159, welche an Punkten 159a mit den Einheiten verbunden ist, vorgesehen. Die Schnur kann ein einfacher Strick, ein Draht oder ein in Glieder unterteilter Strang mit vordefinierten Knickpunkten.

Befindet sich die Vorrichtung 1 im in Figuren 1a und 1d dargestellten ersten Zustand, wobei sich die Einheiten 100 gegenseitig entlang der Vorder- bzw. Rückkante berühren, hängt die Schnur 159 lose zwischen den Einheiten 100. Ein Aufnahmebereich 160 ist nicht vorhanden, da die Schnur 159 im ersten Zustand nicht in einer Einheit versenkt werden muss um eine Berührung der Einheiten zu erlauben.

Wenn die Einheiten auseinanderbewegt werden, sodass die Vorrichtung 1 vom in Figuren 1a und 1d dargestellten ersten Zustand in den in Figuren 1b und 1e dargestellten zweiten Zustand übergehen, wird die Schnur 159 gespannt. Der Maximalabstand wird durch die Länge der Schnur 159 definiert.

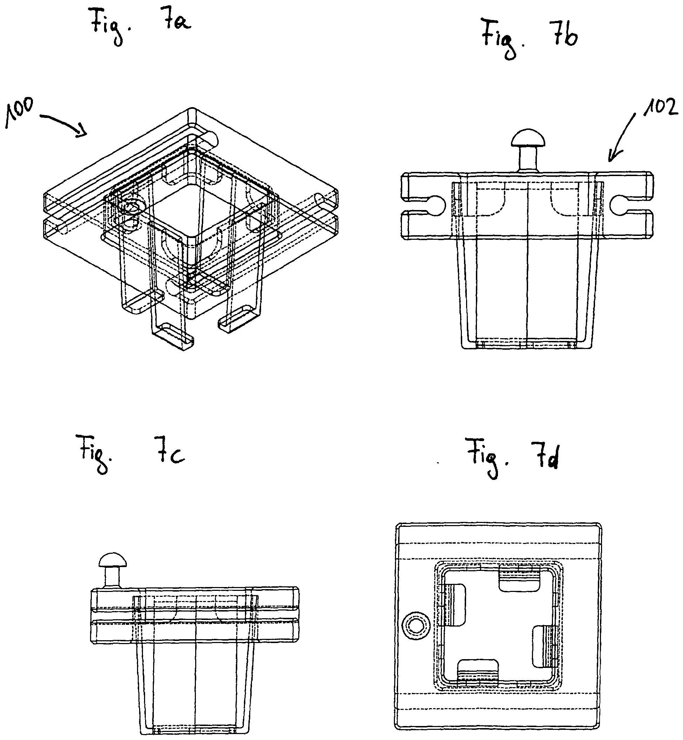

Figur 7 zeigt eine weitere Ausführungsform einer Einheit 100 einer erfindungsgemäßen Vorrichtung. Figur 7a zeigt eine perspektivische Ansicht, Figur 7b eine Seitenansicht, Figur 7c eine Frontalansicht, und Figur 7d eine Draufsicht auf diese Einheit.

Die Struktur der Einheit 100 ähnelt der Struktur der im Zusammenhang mit Figuren 3 bis 6 beschriebenen Einheiten wodurch im allgemeinen auf die dortige Beschreibung verwiesen wird.

Abweichend von den in den Figuren 3 bis 6 dargestellten Einheiten zur Verwendung in einer erfindungsgemäßen Vorrichtung weist die Einheit 100 in dieser Ausführungsform einen vertikal von der Oberseite 102 der Einheit 100 abstehenden, pilzförmigen Fortsatz 170 auf. Dieser Fortsatz kann als Anknüpfungspunkt für diverse Verbindungsmittel zwischen den Einheiten einer Reihe untereinander, zwischen einer endständigen Einheit einer Reihe und dem Rahmen der Vorrichtung, und/oder zwischen den Einheiten und einem Betätigungsmittel zur Veränderung der Position der Einheiten dienen.

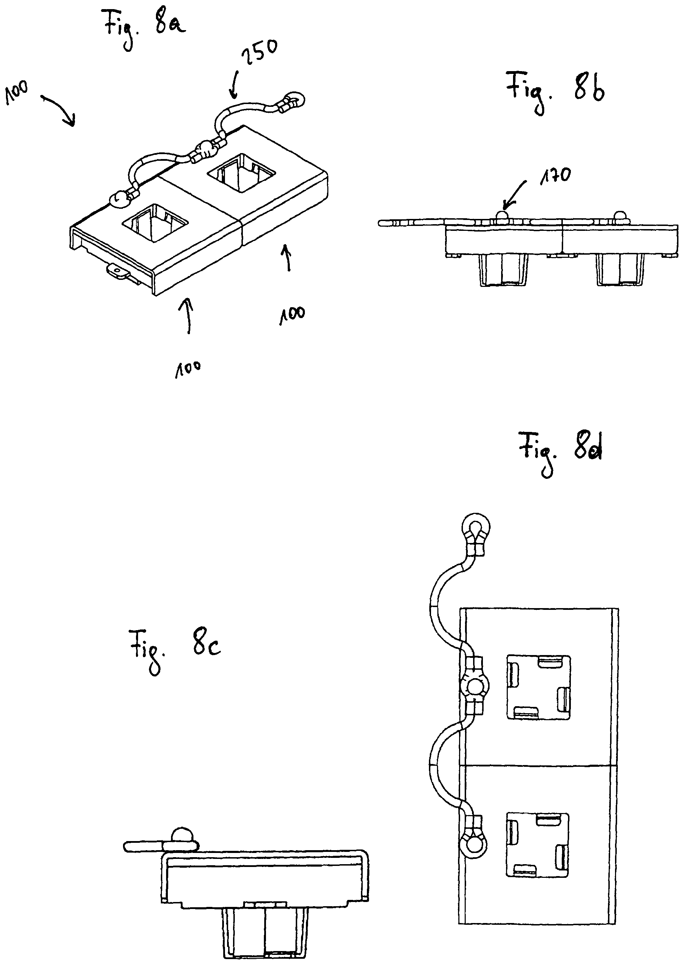

Figur 8 zeigt eine Anordnung von zwei der in Figur 7 dargestellten Einheiten 100, welche innerhalb einer Reihe angeordnet sind und mit einem Strick 250 an deren Fortsätzen 170 verbunden sind. Figur 8a zeigt eine perspektivische Ansicht, Figur 8b eine Seitenansicht, Figur 8c eine Frontalansicht, und Figur 8d eine Draufsicht auf diese Anordnung.

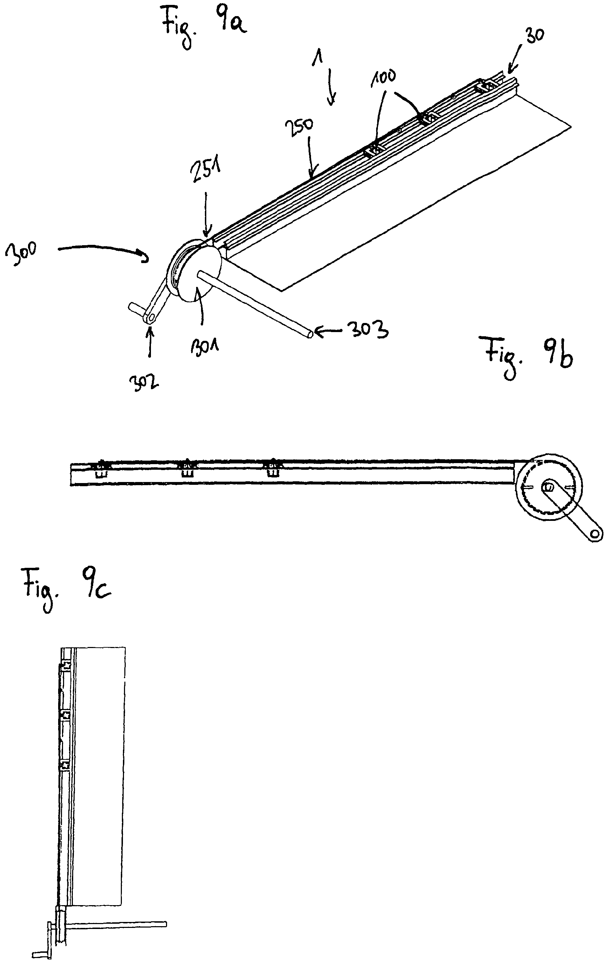

Figur 9a zeigt einen Abschnitt einer Ausführungsform einer erfindungsgemäßen Vorrichtung 1, welcher einer Reihe 30 mit mehreren darin aufgenommenen Einheiten 100 umfasst. In der gezeigten Ausführungsform weist die Vorrichtung ferner einen Betätigungsmechanismus 300 auf, mit dem die Position mehrerer Einheiten 100 innerhalb der Reihe 30 veränderbar ist. Die Einheiten 100 innerhalb der Reihe 30 sind, in der in Figur 8 näher beschriebenen Weise, untereinander verbunden, wobei der Strick 250 in seinem Endbereich 251 an den Betätigungsmechanismus angekoppelt ist.

Der Betätigungsmechanismus 300 weist eine Walze 301 zum aufwickeln des Strickes 250 auf, die auf einer Achse 303 gelagert ist und mit einer Kurbel 302 betätigt werden kann.

Der Betätigungsmechanismus 300 ist an der Stirnseite der Vorrichtung 1 angebracht, sodass alle Einheiten 100 der Reihe 30, und gegebenenfalls simultan die Einheiten mehrerer anderer Reihen, durch Betätigung der Kurbel 302 und Aufwicklung des Stricks 250 auf der Walze 301 zum Betätigungsmechanismus hingezogen werden können. Das Hinziehen zum Betätigungsmechanismus kann einem Auseinanderziehen der Einheiten 100, sodass sich deren Abstand zueinander vergrößert, oder einem Zusammenschieben der Einheiten 100, sodass sich deren Abstand zueinander verkleinert, entsprechen.

Figur 9b zeigt eine Seitenansicht und Figur 9c eine Draufsicht auf die in Figur 9a gezeigte und im Zusammenhang mit Figur 9a näher beschriebene Anordnung.

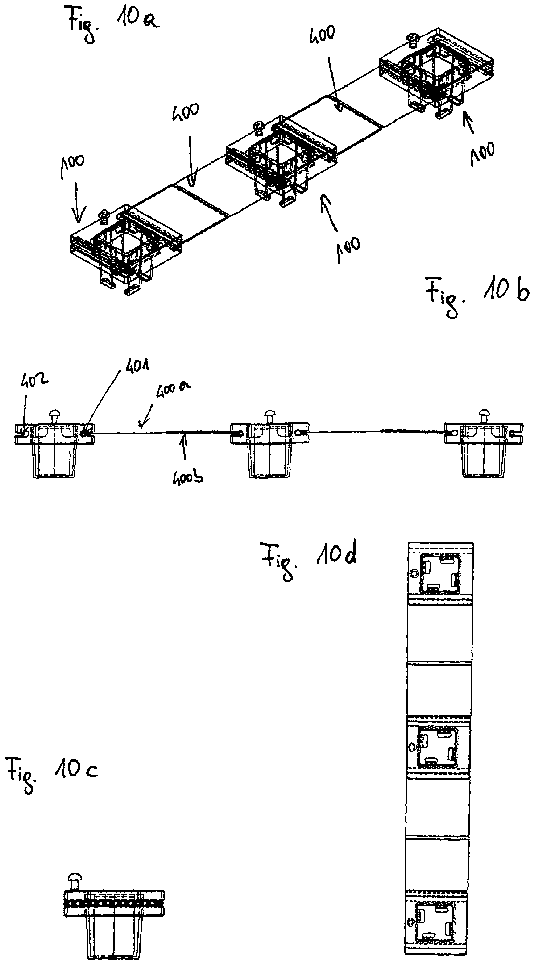

Figur 10a zeigt eine Anordnung von drei voneinander beabstandete Einheiten 100 einer Reihe einer erfindungsgemäßen Vorrichtung. Die Struktur der Einheiten 100 an sich ähnelt der Struktur der im Zusammenhang mit Figuren 3 bis 7 beschriebenen Einheiten wodurch im allgemeinen auf die dortige Beschreibung verwiesen wird.

Eine Besonderheit der in Figur 10a dargestellten Anordnung besteht darin, dass der Zwischenraum zwischen benachbarten Einheiten durch eine plattenförmige Abdeckung 400 abgedeckt wird. Diese weist einen dünnen Abschnitt 400a und einen dicken Abschnitt 400b auf, wobei sich der dünne Abschnitt 400a teleskopartig im dicken Abschnitt 400b versenken lässt. In dieser Weise lässt sich die längliche Erstreckung der Abdeckung 400 in einem gewissen Bereich auf einen veränderten Abstand zwischen zwei benachbarten Einheiten 100, deren Zwischenraum durch die Abdeckung 400 abgedeckt wird, anpassen.

An deren Enden weist die Abdeckung 400 eine Verdickung 401 auf, die sich reversibel in eine nutförmige Führung 402 in den Einheiten 100 einführen und darin befestigen lässt. So kann die Abdeckung 400 bei Bedarf einfach zu der Vorrichtung hinzugefügt oder von der Vorrichtung entnommen werden, und ist zudem im Verlauf einer Streckung oder Stauchung der Einheiten 100 innerhalb einer Reihe fest mit den benachbarten Einheiten 100 verbunden. Selbstverständlich sind auch andere Formen der Verbindung zwischen Abdeckung 400 und Einheiten 100 denkbar.

Durch die Überlagerung des Zwischenraumes zwischen benachbarten und voneinander beabstandeten Einheiten 100 innerhalb einer Reihe der Vorrichtung dient dazu, das Substrat bzw. Nährmedium unterhalb der Ebene der Einheiten auch nach dem Auseinanderziehen der Einheiten bedeckt und damit vor Einflüssen von außen geschützt zu halten.

Figur 10b zeigt eine Seitenansicht, Figur 10c eine Frontalansicht, und Figur 10d eine Draufsicht auf die in Figur 10a gezeigte und im Zusammenhang mit Figur 10a näher beschriebene Anordnung.

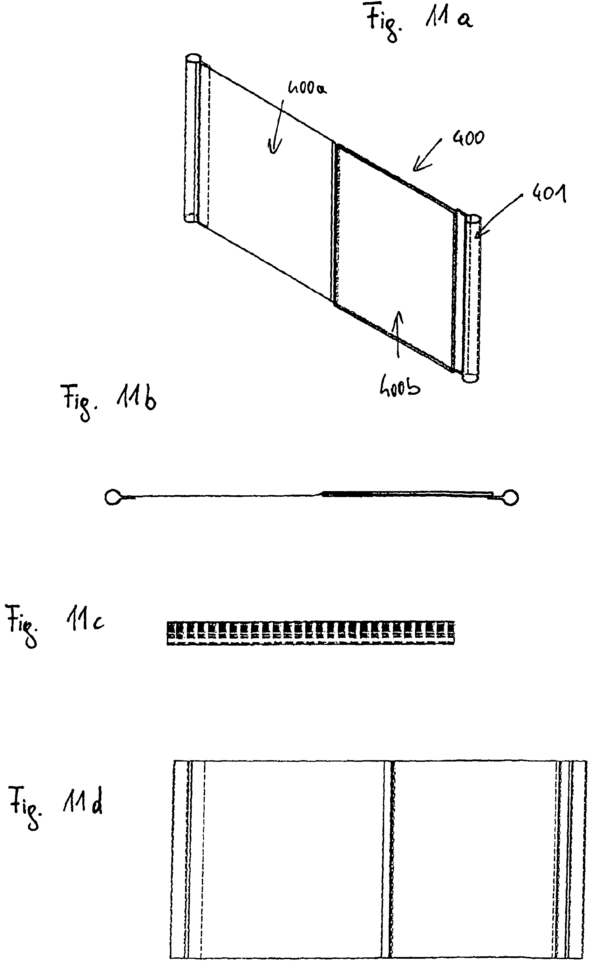

Figur 11a zeigt in perspektivischer Ansicht eine Detailansicht der in der in Figur 10 gezeigten Anordnung verwendeten Abdeckung 400. Generell wird auf die dortige Beschreibung verwiesen. Figur 11b zeigt eine Seitenansicht, Figur 11c eine Frontalansicht, und Figur 11d eine Draufsicht auf die in Figur 11a gezeigte Abdeckung 400.

Die gezeigte teleskopartige Versenkung eines dünnen Abschnitts 400a in einem dicken Abschnitt 400b ist selbstverständlich nicht die einzige Möglichkeit einer Ausbildung einer derartigen Abdeckung, die für den Einsatz in einer erfindungsgemäßen Vorrichtung geeignet ist. Die Abdeckung kann neben einer starren und plattenförmigen Gestalt außerdem elastisch und planenförmig sein. Zur Anpassung Ihrer Fläche an den veränderbaren Abstand zwischen benachbarten Einheiten ist auch ein Falten oder anderweitiges Verformen, beispielsweise Verbiegen denkbar. Auch eine Kombination aus diesen Mechanismen zur Veränderung Ihrer Fläche ist denkbar.

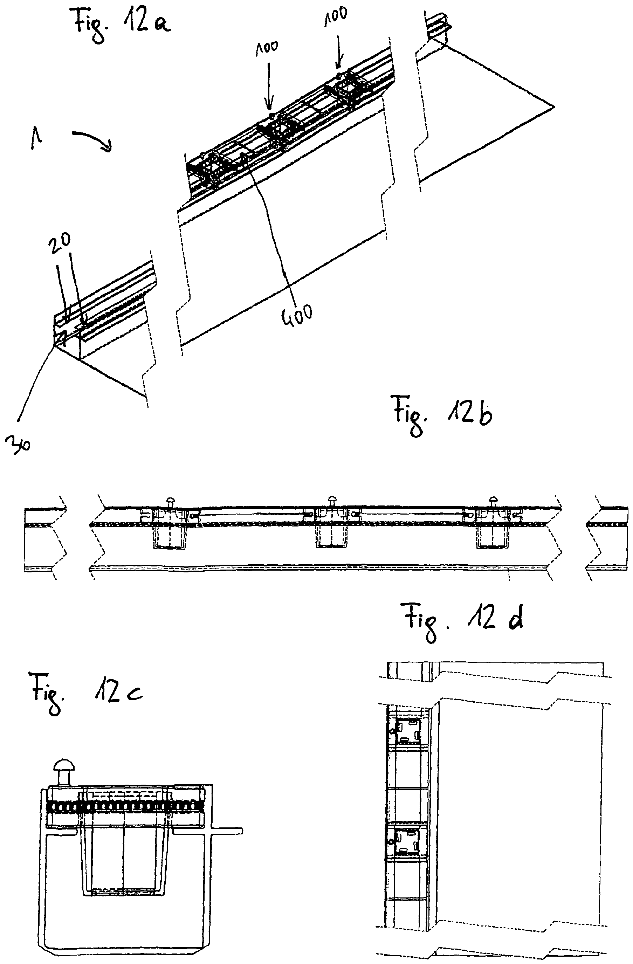

Figur 12a zeigt einen Abschnitt einer Ausführungsform einer erfindungsgemäßen Vorrichtung, wobei eine in Figur 10 dargestellte Anordnung von drei voneinander beabstandete Einheiten 100 einer Reihe 30 in den Führungsschienen 20 der Reihe aufgenommen ist. Im übrigen wird auf die obige Beschreibung verwiesen. Figur 12b zeigt eine Seitenansicht, Figur 12c eine Frontalansicht, und Figur 12d eine Draufsicht auf den in Figur 12a gezeigten Abschnitt.

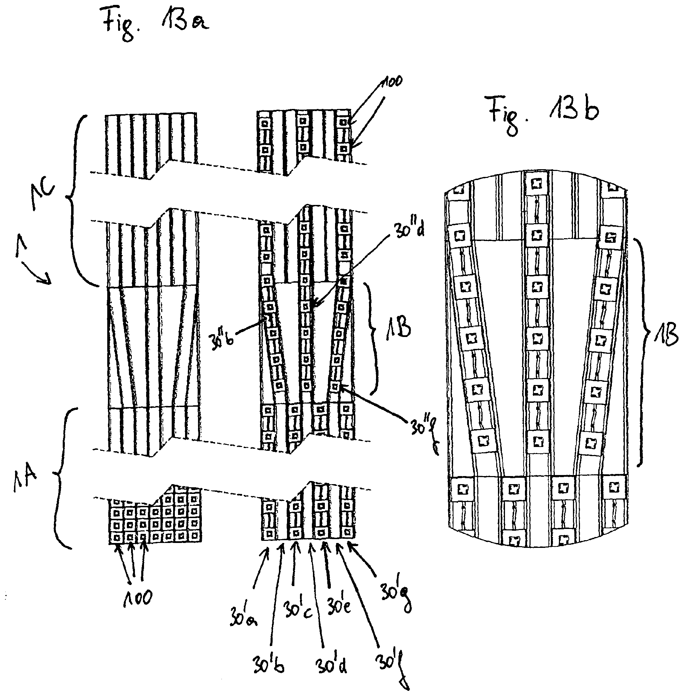

Figur 13a zeigt zwei Darstellungen einer Ausführungsform der erfindungsgemäßen Vorrichtung 1 mit unterschiedlich verteilten Einheiten 100, wobei die Vorrichtung in drei Abschnitte 1A, 1B und 1C unterteilt ist. Die Einheiten befinden sich in mehreren verschiedenen Reihen 30a bis 30g.

Der erste Abschnitt 1A entspricht der Grundform der erfindungsgemäßen Vorrichtung mit parallel verlaufenden Reihen 30a bis 30g, wie er bereits im Zusammenhang mit der Beschreibung der Figur 1 näher erläutert wurde. Auf die diesbezügliche Beschreibung wird in diesem Zusammenhang verwiesen.

Direkt angrenzend an den ersten Abschnitt 1A befindet sich ein Übergangsabschnitt 1B. In diesem Übergangsabschnitt werden nur eine weniger als die Hälfte der ursprünglich im ersten Abschnitt 1A vorhandenen Reihen 30'a bis 30'g fortgeführt, nämlich die Reihen 30"b, 30"d und 30"f. Die verbleibenden Reihen 30"a, 30"c, 30"e und 30"g enden beim Übergang vom ersten Abschnitt 1A zum zweiten Abschnitt 1B. Die im Übergangsabschnitt 1B fortlaufenden Reihen 30"b, 30"d und 30"f grenzen im ersten Abschnitt 1A nicht aneinander an. Im Übergangsabschnitt 1B verlaufen die ursprünglich parallelen fortgeführten Reihen 30"b, 30"d und 30"f nicht mehr parallel zueinander, sondern verlaufen so, dass sich mit zunehmender Entfernung vom ersten Abschnitt 1A ein immer größer werdender Abstand zwischen ihnen einstellt, bis diese am anderen Ende des Übergangsabschnitts 1B gleichmäßig mit maximalem Abstand zueinander über die Breite der Vorrichtung verteilt sind.

Wiederum direkt angrenzend an den Übergangsabschnitt 1B befindet sich ein dritter Abschnitt 1C. In diesem dritten Abschnitt laufen diejenigen Reihen 30"b, 30"d und 30"f, die bereits im Übergangsabschnitt 1B fortgeführt wurden, parallel und mit maximalem Abstand über die Breite der Vorrichtung zueinander fort.

In der rechten Abbildung der Figur 13a liegen alle Einheiten 100 aneinander angrenzend im ersten Abschnitt. Diese Position wird bevorzugt bei der Aussaat und in frühen Wachstumsstadien der Pflanzen verwendet, um die räumliche Ausdehnung der Setzlinge möglichst gering zu halten. In der linken Abbildung der Figur 13a wurden die Einheiten so über alle drei Abschnitte 1A, 1B und 1C der Vorrichtung 1 verteilt, dass diese einen maximalen Abstand zueinander haben. Dabei befinden sich alle zu den Reihen 30"b, 30"d und 30"f gehörigen Einheiten 100 im zweiten 1B und dritten 1C Abschnitt, während die zu den Reihen 30"a, 30"c, 30"e und 30"g gehörigen Einheiten 100 über den ersten Abschnitt 1A verteilt sind. Innerhalb der jeweiligen Bereiche sind die Einheiten mit maximalem Versatz zueinander angeordnet, um einen möglichst großen Abstand der Einheiten zu erhalten. Diese Position wird bevorzugt in späten Wachstumsstadien der Pflanzen verwendet, um den Abstand der Pflanzen zueinander zu maximieren.

Figur 13b zeigt den Übergangsabschnitt 1B der in Figur 13a gezeigten Anordnung und die angrenzenden Bereiche des ersten 1A und dritten 1C Abschnitts in Vergrößerung.

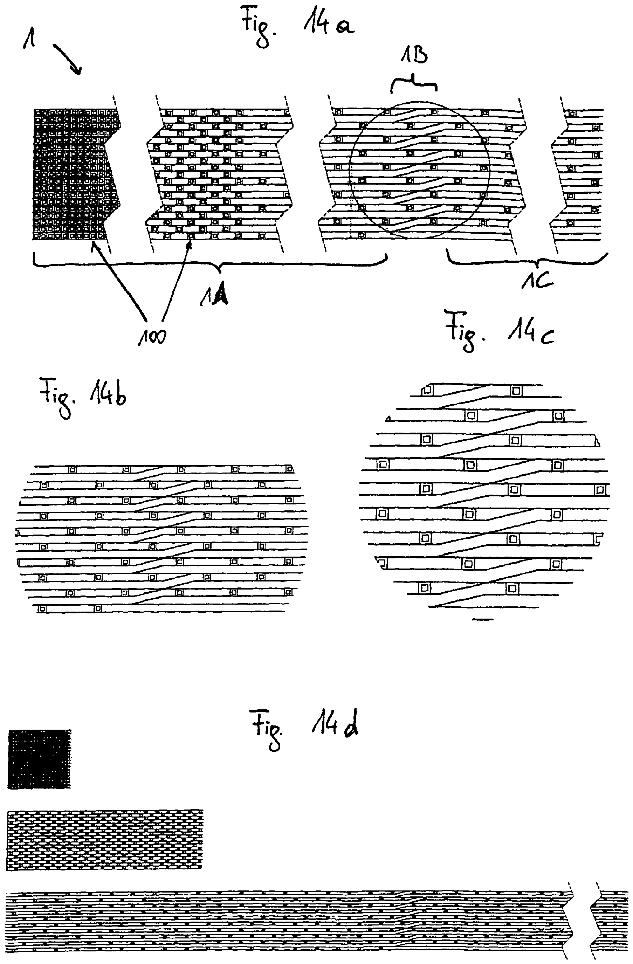

Figur 14a zeigt eine weitere Ausführungsform der erfindungsgemäßen Vorrichtung 1 mit darin verteilten Einheiten 100, wobei die Vorrichtung in drei Abschnitte 1A, 1B und 1C unterteilt ist. Die Darstellung ist in ihrer horizontalen Erstreckung mehrmals unterbrochen, wobei in jedem Fragment jeweils unterschiedliche Verteilungszustände der Einheiten 100 innerhalb der Vorrichtung gezeigt werden. Diese unterschiedlichen Verteilungszustände wurden bereits im Zusammenhang mit der Figur 13 diskutiert, sodass in diesem Zusammenhang auf die dortige Beschreibung verwiesen wird.

Im Gegensatz zu der in Figur 13 gezeigten Ausführungsform der Anordnung liegt die Besonderheit der in Figur 14 gezeigten Anordnung in der Gestaltung des Übergangsabschnitts 1B, welcher auch in Figuren 14b und insbesondere 14c noch einmal vergrößert dargestellt ist.

Der Übergangsabschnitt 1B befindet sich direkt angrenzend zwischen dem ersten Abschnitt 1A und dem dritten Abschnitt 1C. In diesem Übergangsabschnitt wird jede zweite der ursprünglich im ersten Abschnitt 1A vorhandenen Reihen fortgeführt, während die verbleibenden Reihen beim Übergang vom ersten Abschnitt 1A zum zweiten Abschnitt 1B enden. Die im Übergangsabschnitt 1B fortlaufenden Reihen grenzen im ersten Abschnitt 1A nicht aneinander an. Im Übergangsabschnitt 1B verlaufen die fortgeführten Reihen weiterhin parallel zueinander, jedoch wird ihre Richtung gegenüber der ursprünglich, in Abschnitt 1A eingenommenen Richtung verändert. Mit zunehmender Entfernung vom ersten Abschnitt 1A werden diese Reihen dann so versetzt, bis diese am anderen Ende des Übergangsabschnitts 1B seitliche um die Bereite einer gesamten Reihe verschoben wurden und gleichmäßig mit maximalem Abstand zueinander über die Breite der Vorrichtung verteilt sind. Im dritten Abschnitt 1C verlaufen diese Reihen, die den zweiten Abschnitt 1B durchlaufen, wiederum parallel zueinander in derjenigen Richtung, die sie ursprünglich im ersten Abschnitt 1A eingenommen hatten.

Figur 14b zeigt die in Figuren 14a bis 14c gezeigte Ausführungsform der Vorrichtung mit Fragment jeweils unterschiedlichen Verteilungszuständen der Einheiten 100 innerhalb der Vorrichtung. In der oberen Abbildung der Figur 14d liegen alle Einheiten 100 aneinander angrenzend im ersten Abschnitt 1A. Diese Position wird bevorzugt bei der Aussaat und in frühen Wachstumsstadien der Pflanzen verwendet, um die räumliche Ausdehnung der Setzlinge möglichst gering zu halten. In der mittleren Abbildung der Figur 14d liegen alle Einheiten 100 mit maximalem Versatz zueinander im ersten Abschnitt 1A. Diese Position wird bevorzugt in leicht fortgeschrittenen Wachstumsstadien der Pflanzen verwendet. In der unteren Abbildung der Figur 14d wurden die Einheiten so über alle drei Abschnitte 1A, 1B und 1C der Vorrichtung 1 verteilt, dass diese einen maximalen Abstand zueinander haben. Dabei befinden sich alle zu den über den Verlauf des zweiten 1B und dritten 1C Abschnitt fortgeführten Reihen gehörigen Einheiten 100 im zweiten 1B und dritten 1C Abschnitt, während die zu den verbleibenden Reihen gehörigen Einheiten 100 über den ersten Abschnitt 1A verteilt sind. Innerhalb der jeweiligen Bereiche sind die Einheiten mit maximalem Versatz zueinander angeordnet. Diese Position wird bevorzugt in späten Wachstumsstadien der Pflanzen verwendet, um den Abstand der Pflanzen zueinander zu maximieren.

Zusammenfassend kann mit einer erfindungsgemäßen Vorrichtung optimal und einfach auf den aus dem Wachstum der Pflanzen resultierenden, steigenden Platzbedarf der Pflanzen eingegangen werden. Eine großflächige Ernte und Bewässerung kann vermieden werden. Die Übertragung von Ungeziefer oder Bakterien von einer Pflanze zur nächsten, was durch einen geringen Abstand der Pflanzen voneinander bedingt sein kann, wird wirkungsvoll verringert.

Die erfindungsgemäße Vorrichtung kann Bestandteil einer Gesamtanlage sein, in der beispielsweise Setzlinge oder junge Pflanzen oder Triebe in die Einheiten eingesetzt werden, nach einer gewissen Zeit der Abstand der Einheiten vergrößert wird und die Einheiten sodann zu einer Erntestation oder dergleichen der Gesamtanlage verfahren werden, in die die Einheiten oder die Pflanzen aus den Einheiten entnommen werden. Insofern bezieht sich die vorliegende Erfindung auch auf eine solche Gesamtanlage und/oder auf die Verwendung der Vorrichtung in einer solchen Gesamtanlage.

## Patentansprüche

1. Vorrichtung (1) zur Aufzucht von Pflanzen mit wenigstens zwei in der Vorrichtung (1) angeordneten Einheiten (100) zur Aufnahme einer Pflanze, wobei wenigstens zwei Einheiten (100) in einer ersten Reihe (30) angeordnet sind und zumindest eine dieser Einheiten (100) relativ zu wenigstens einer weiteren Einheit (100) der ersten Reihe (30) beweglich ist, sodass deren Abstand zueinander veränderbar ist, **dadurch gekennzeichnet, dass** eine, mehrere oder alle Einheiten (100) einen Aufnahmebereich (160) für ein Verbindungsmittel (150) aufweisen, wobei wenigstens zwei benachbarten Einheiten (100) innerhalb einer Reihe (30) durch Verbindungsmittel (150) verbunden sind, wobei durch die Verbindungsmittel (150) ein Maximalabstand zwischen den verbundenen Einheiten (100) definiert ist und gegebenenfalls verändert werden kann, wobei sich zwischen benachbarten Einheiten (100) einer Reihe eine Abdeckung (400) befindet oder wobei zwischen benachbarten Einheiten (100) einer Reihe eine Abdeckung (400) einfügbar ist, die den Zwischenraum zwischen den Einheiten (100) abdeckt, wenn diese zueinander beabstandet sind.

2. Vorrichtung (1) gemäß Anspruch 1, wobei die Vorrichtung (1) wenigstens n weitere Reihen (30) aufweist, die vorzugsweise wenigstens abschnittsweise parallel zueinander und/oder wenigstens abschnittsweise parallel zu der ersten Reihe (30) angeordnet sind, wobei n eine ganze Zahl ≥ 1 ist und wobei in mehreren und vorzugsweise in jeder der n weiteren Reihen wenigstens zwei Einheiten (100) zur Aufnahme einer Pflanze angeordnet sind, deren Abstand zueinander veränderbar ist.

3. Vorrichtung (1) gemäß einem der vorangehenden Ansprüche, wobei eine Reihe (30) mindestens m Einheiten (100) aufweist, wobei m eine ganze Zahl ≥ 1 ist und zumindest eine und vorzugsweise zumindest m-1 dieser Einheiten (100) relativ zu wenigstens einer weiteren Einheit (100) der jeweiligen Reihe beweglich sind, sodass deren Abstand zueinander veränderbar ist.

4. Vorrichtung (1) gemäß einem der vorangehenden Ansprüche, wobei benachbarte Einheiten (100) innerhalb einer, mehrerer oder aller Reihen (30) nicht mehr als einen definierten Maximalabstand zueinander haben können.

5. Vorrichtung (1) gemäß einem der vorangehenden Ansprüche, wobei die Vorrichtung (1) wenigstens zwei aneinander angrenzende Abschnitte entlang dem Verlauf der Reihen (30) aufweist, wobei im ersten Abschnitt wenigstens zwei und vorzugsweise alle Reihen (30) parallel zueinander verlaufen, und wobei sich im zweiten Abschnitt der Abstand wenigstens zweier Reihen (30) zueinander verändert, vorzugsweise vergrößert, und weiter vorzugsweise verdoppelt, wobei vorzugsweise vorgesehen ist, dass sich die Anzahl der Reihen (30) beim Übergang vom ersten zum zweiten Abschnitt reduziert, vorzugsweise halbiert.

6. Vorrichtung (1) gemäß Anspruch 5, wobei die Vorrichtung (1) wenigstens drei aneinander angrenzende Abschnitte entlang dem Verlauf der Reihen (30) aufweist, und wobei der dritte Abschnitt eine im Vergleich zum ersten Abschnitt reduzierte, vorzugsweise halbierte Anzahl an Reihen (30) aufweist, die vorzugsweise parallel zueinander verlaufen.

7. Vorrichtung (1) gemäß einem der vorangehenden Ansprüche, wobei die beweglichen Einheiten (100) einer, mehrerer oder aller Reihen (30) wenigstens abschnittsweise in einer vorzugsweise horizontalen Ebene der Vorrichtung (1) entlang einer geraden oder gekrümmten Linie verschiebbar sind und/oder wobei wenigstens zwei Reihen (30) von Einheiten (100) vorgesehen sind, die vorzugsweise wenigstens abschnittsweise parallel zueinander verlaufen und/oder deren Einheiten wenigstens abschnittsweise in derselben Richtung beweglich sind.

8. Vorrichtung (1) gemäß einem der vorangehenden Ansprüche, wobei die Linien, die die Bewegungsrichtung der Einheiten (100) in der Vorrichtung definieren, von zumindest zwei und vorzugsweise allen Reihen (30) der Vorrichtung (1) wenigstens abschnittsweise parallel verlaufen, und/oder wobei die beweglichen Einheiten (100) einer Reihe (30) entlang einem gemeinsamen geraden oder gekrümmten Linearlager, vorzugsweise einer Gleitführung mit zwei Schienen angeordnet sind, und/oder wobei alle Einheiten (100) einer oder mehrerer Reihen (30) relativ zur Vorrichtung (1) beweglich sind, und/oder wobei eine vorzugsweise endständige Einheit (100) einer oder mehrerer Reihen (30) relativ zur Vorrichtung (1) nicht beweglich ist und alle übrigen Einheiten (100) dieser Reihen relativ zur Vorrichtung (1) beweglich sind.

9. Vorrichtung (1) gemäß einem der vorangehenden Ansprüche, wobei eine erste Position und/oder eine zweite Position und/oder eine dritte Position von wenigstens zwei, vorzugsweise mehreren und besonders bevorzugt allen Einheiten (100) innerhalb einer, mehrerer oder aller Reihen (30) bestimmbar ist, und/oder wobei die Vorrichtung (1) ein Betätigungsmittel aufweist, mit dem der Abstand von wenigstens zwei, vorzugsweise mehreren und besonders bevorzugt allen Einheiten (100) innerhalb einer, mehrerer oder aller Reihen (30) gleichzeitig oder nacheinander veränderbar ist.

10. Vorrichtung (1) gemäß einem der vorangehenden Ansprüche, wobei eine zweite Position von wenigstens zwei, vorzugsweise mehreren und besonders bevorzugt allen Einheiten (100) wenigstens zweier benachbarter, vorzugsweise mehrerer und besonders bevorzugt aller Reihen (30) so definiert oder definierbar ist, dass die Einheiten (100) zweier benachbarter Reihen (30) entlang der Bewegungsrichtung versetzt sind, vorzugsweise um die Hälfte eines definierten Maximalabstandes zweier Einheiten (100) innerhalb einer Reihe (30) zueinander.

11. Vorrichtung (1) gemäß einem der Ansprüche 6 bis 10, wobei eine dritte Position von wenigstens zwei, vorzugsweise mehreren und besonders bevorzugt allen Einheiten (100) wenigstens zweier benachbarter, vorzugsweise mehrerer und besonders bevorzugt aller Reihen (30) so definiert oder definierbar ist, dass sich von den Einheiten (100) zweier benachbarter Reihen (30) die Einheiten (100) einer Reihe (30) im ersten Abschnitt und die Einheiten (100) der anderen Reihe (30) im dritten Abschnitt befinden.

12. Vorrichtung (1) gemäß einem der vorangehenden Ansprüche, wobei zwischen wenigstens zwei, vorzugsweise mehreren und besonders bevorzugt allen benachbarten Einheiten (100) innerhalb einer, mehrerer oder aller Reihen ein Federmittel vorhanden ist, das die Einheiten (100) voneinander abstößt, und wobei die Vorrichtung (1) vorzugsweise wenigstens einen lösbaren Sperrmechanismus aufweist, der der Abstand zwischen wenigstens zwei, vorzugsweise mehreren und besonders bevorzugt allen benachbarten Einheiten (100) innerhalb einer, mehrerer oder aller Reihen (30) kleiner als einen definierten Maximalabstand halten kann.

13. Vorrichtung (1) gemäß einem der vorangehenden Ansprüche, wobei vorgesehen ist, dass die Verbindungsmittel (150) permanent und/oder fest und/oder integral mit einer oder mehreren Einheiten (100) verbunden sind.

14. Vorrichtung (1) gemäß einem der vorangehenden Ansprüche, wobei die Vorrichtung (1) einen Betätigungsmechanismus (300) aufweist, mit dem die Position aller Einheiten (100) innerhalb wenigstens einer Reihe (30), oder die Position aller Einheiten (100) innerhalb mehrerer Reihen (30) gemeinsam veränderbar und bestimmbar ist.

## Claims

1. An apparatus (1) for breeding plants having at least two units (100) arranged in the apparatus (1) for the reception of a plant, wherein at least two units (100) are arranged in a first row (30) and at least one of these units (100) is movable relative to at least one further unit (100) of the first row (30) so that their spacing from one another is changeable, **characterized in that** one unit (100), a plurality of, or all the units (100) has/have a reception region (160) for a connection means (150), with at least two adjacent units (100) within a row (30) being connected by connection means (150), with a maximum spacing between the connected units (100) being defined by the connection means (150) and optionally being able to be changed, with a cover (400) being located between adjacent units (100) of a row or with a cover (400) being insertable between adjacent units (100) of a row which covers the intermediate space between the units (100) when they are spaced apart from one another.

2. An apparatus (1) in accordance with claim 1, wherein the apparatus (1) has at least n further rows (30) which are preferably arranged parallel to one another at least section-wise and/or parallel to the first row (30) at least section-wise, where n is a whole number ≥ 1 and wherein at least two units (100) for the reception of a plant are arranged in a plurality of and preferably in each of the n further rows and their spacing from one another is changeable.

3. An apparatus (1) in accordance with one of the preceding claims, wherein a row (30) has at least m units (100), where m is a whole number ≥ 1 and at least one and preferably at least m-1 of these units (100) are movable relative to at least one further unit (100) of the respective row so that their spacing from one another is changeable.

4. An apparatus (1) in accordance with one of the preceding claims, wherein adjacent units (100) can have no more than a defined maximum spacing from one another within one row, a plurality or all of the rows (30).

5. An apparatus (1) in accordance with one of the preceding claims, wherein the apparatus (1) has at least two mutually adjacent sections along the extent of the rows (30), wherein at least two rows (30) and preferably all rows (30) extend parallel to one another in the first section and wherein the spacing of at least two rows (30) from one another in the second section changes, preferably increases, and further preferably doubles, with provision preferably being made that the number of the rows (30) reduces, preferably halves, on the transition from the first section to the second section.

6. An apparatus (1) in accordance with claim 5, wherein the apparatus (1) has at least three mutually adjacent sections along the extent of the rows (30), and wherein the third section has a number of rows (30) which preferably extend parallel to one another and which is reduced, preferably halved, in comparison with the first section.

7. An apparatus (1) in accordance with one of the preceding claims, wherein the movable units (100) of one row (30), of a plurality or of all rows (30) in a preferably horizontal plane of the apparatus (1) are displaceable at least section-wise along a straight or curved line; and/or wherein at least two rows (30) of units (100) are provided which preferably extend parallel to one another at least section-wise and/or whose units are movable in the same direction at least section-wise.

8. An apparatus (1) in accordance with one of the preceding claims, wherein the lines which define the direction of movement of the units (100) in the apparatus extend in parallel from at least two rows (30), and preferably from all rows (30) of the apparatus (1) at least section-wise; and/or wherein the movable units (100) of a row (30) are arranged along a common straight or curved linear bearings, preferably a sliding guide having two rails; and/or wherein all the units (100) of one row (30) or of a plurality of rows (30) are movable relative to the apparatus (1); and/or wherein a unit (100), preferably a terminal unit (100), of one row (30) or of a plurality of rows (30) is not movable relative to the apparatus (1) and all the remaining units (100) of these rows are movable relative to the apparatus (1).

9. An apparatus (1) in accordance with one of the preceding claims, wherein a first position and/or a second position and/or a third position of at least two units (100), preferably a plurality of, and particularly preferably all units (100) can be determined within one row (30), a plurality of or all rows (30); and/or wherein the apparatus (1) has an actuating means with which the spacing of at least two units (100), preferably a plurality of, and particularly preferably all the units (100) within one row (30), a plurality of rows or all the rows (30) can be changed simultaneously or successively.

10. An apparatus (1) in accordance with one of the preceding claims, wherein a second position of at least two units (100), preferably a plurality of, and particularly preferably all the units (100) of at least two adjacent rows (30), preferably a plurality of, and particularly preferably all of the rows (30) is defined or definable so that the units (100) of two adjacent rows (30) are offset along the direction of movement, preferably by half of a defined maximum spacing of two units (100) with respect to one another within a row (30).

11. An apparatus (1) in accordance with one of the claims 6 to 10, wherein a third position of at least two units (100), preferably of a plurality of, and particularly preferably all units (100) of at least two adjacent rows (30), preferably a plurality of, and particularly preferably all rows (30) is defined or definable so that of the units (100) of two adjacent rows (30) the units (100) of one row (30) are located in the first section and the units (100) of the other row (30) are located in the third section.

12. An apparatus (1) in accordance with one of the preceding claims, wherein a spring means is provided between at least two adjacent units (100), preferably a plurality of, and particularly preferably all the adjacent units (100) within one row (30), a plurality of, or all the rows (30) and pushes the units (100) away from one another; and wherein the apparatus (1) preferably has at least one releasable blocking mechanism which can keep the spacing between at least two adjacent units (100), preferably a plurality of, and particularly preferably all the adjacent units (100) within one row (30), a plurality of, or all the rows (30) smaller than a defined maximum spacing.

13. An apparatus (1) in accordance with one of the preceding claims, wherein provision is made that the connection means (150) are permanently and/or fixedly and/or integrally connected to one or more units (100).

14. An apparatus (1) in accordance with one of the preceding claims, wherein the apparatus (1) has an actuating mechanism (300) with which the position of all units (100) within at least one row (30), or the position of all units (100) within a plurality of rows (30) can be changed and determined together.

## Revendications

1. Dispositif (1) pour la culture de plantes comprenant au moins deux unités (100) disposées dans le dispositif (1) pour recevoir une plante, au moins deux unités (100) étant disposées dans une première rangée (30) et au moins une de ces unités (100) étant mobile par rapport à au moins une autre unité (100) de la première rangée (30), de sorte que la distance entre elles est modifiable, **caractérisé en ce que** une, plusieurs ou toutes les unités (100) comportent une zone de réception (160) pour un moyen de liaison (150), au moins deux unités (100) voisines dans une rangée (30) étant reliées par des moyens de liaison (150), une distance maximale entre les unités (100) reliées étant définie et pouvant éventuellement être modifiée par les moyens de liaison (150), un élément de recouvrement (400) se trouvant entre des unités (100) voisines d'une rangée ou un élément de recouvrement (400) pouvant être inséré entre des unités (100) voisines d'une rangée, lequel recouvre l'espace intermédiaire entre les unités (100), quand celles-ci sont espacées les unes des autres.

2. Dispositif (1) selon la revendication 1, dans lequel le dispositif (1) comporte au moins n autres rangées (30), qui sont disposées de préférence au moins sur certaines parties parallèlement les unes aux autres et/ou au moins sur certaines parties parallèlement à la première rangée (30), n étant un nombre entier ≥ 1 et au moins deux unités (100) pour recevoir une plante étant disposées dans plusieurs et de préférence dans chacune des n autres rangées, la distance entre ces unités étant modifiable.

3. Dispositif (1) selon l'une des revendications précédentes, dans lequel une rangée (30) comporte au moins m unités (100), m étant un nombre entier ≥ 1 et au moins une et de préférence au moins m-1 de ces unités (100) étant mobiles par rapport à au moins une autre unité (100) de la rangée respective, de sorte que la distance entre elles est modifiable.

4. Dispositif (1) selon l'une des revendications précédentes, dans lequel des unités (100) voisines dans une, plusieurs ou toutes les rangées (30) ne peuvent pas avoir plus d'une distance maximale prédéfinie entre elles.

5. Dispositif (1) selon l'une des revendications précédentes, dans lequel le dispositif (1) comporte au moins deux portions adjacentes l'une à l'autre le long du parcours des rangées (30), au moins deux et de préférence toutes les rangées (30) s'étendant parallèlement les unes aux autres dans la première portion, et la distance entre au moins deux rangées (30) se modifiant, de préférence s'agrandissant, et plus préférablement doublant dans la deuxième portion, le nombre de rangées (30) étant de préférence prévu pour diminuer, de préférence diminuer de moitié au passage de la première à la deuxième portion.

6. Dispositif (1) selon la revendication 5, dans lequel le dispositif (1) comporte au moins trois portions adjacentes les unes aux autres le long du parcours des rangées (30), et dans lequel la troisième portion comporte un nombre réduit, de préférence réduit de moitié par rapport à la première portion, de rangées (30), qui s'étendent de préférence parallèlement les unes aux autres.

7. Dispositif (1) selon l'une des revendications précédentes, dans lequel les unités (100) mobiles d'une, de plusieurs ou de toutes les rangées (30) peuvent être déplacées au moins sur certaines parties dans un plan de préférence horizontal du dispositif (1) le long d'une ligne droite ou courbe et/ou dans lequel au moins deux rangées (30) d'unités (100) sont prévues, qui s'étendent de préférence au moins sur certaines parties parallèlement les unes aux autres et/ou dont les unités sont mobiles au moins sur certaines parties dans la même direction.

8. Dispositif (1) selon l'une des revendications précédentes, dans lequel les lignes, qui définissent la direction de déplacement des unités (100) dans le dispositif, d'au moins deux et de préférence de toutes les rangées (30) du dispositif (1) s'étendent au moins sur certaines parties parallèlement les unes aux autres, et/ou dans lequel les unités (100) mobiles d'une rangée (30) sont disposées le long d'un roulement linéaire droit ou courbe commun, de préférence d'un guidage de glissement avec deux rails, et/ou dans lequel toutes les unités (100) d'une ou de plusieurs rangées (30) sont mobiles par rapport au dispositif (1), et/ou dans lequel une unité (100) de préférence située à une extrémité d'une ou de plusieurs rangées (30) n'est pas mobile par rapport au dispositif (1) et toutes les autres unités (100) de cette rangée sont mobiles par rapport au dispositif (1).

9. Dispositif (1) selon l'une des revendications précédentes, dans lequel une première position et/ou une deuxième position et/ou une troisième position d'au moins deux, de préférence de plusieurs et plus préférentiellement de toutes les unités (100) dans une, plusieurs ou toutes les rangées (30) peuvent être déterminées, et/ou dans lequel le dispositif (1) comporte un moyen d'actionnement, au moyen duquel la distance entre au moins deux, de préférence plusieurs et plus préférentiellement toutes les unités (100) dans une, plusieurs ou toutes les rangées (30) peut être modifiée simultanément ou successivement.

10. Dispositif (1) selon l'une des revendications précédentes, dans lequel une deuxième position d'au moins deux, de préférence de plusieurs et plus préférentiellement de toutes les unités (100) d'au moins deux rangées (30) voisines, de préférence de plusieurs et plus préférentiellement de toutes les rangées (30), est ou peut être définie de telle manière que les unités (100) de deux rangées (30) voisines sont décalées le long de la direction de déplacement de préférence de la moitié d'une distance maximale définie entre deux unités (100) dans une rangée (30).

11. Dispositif (1) selon l'une des revendications 6 à 10, dans lequel une troisième position d'au moins deux, de préférence de plusieurs et plus préférentiellement de toutes les unités (100) d'au moins deux rangées (30) voisines, de préférence de plusieurs et plus préférentiellement de toutes les rangées (30), est ou peut être définie de telle manière que, pour les unités (100) de deux rangées (30) voisines, les unités (100) d'une rangée (30) se trouvent dans la première portion et les unités (100) de l'autre rangée (30) dans la troisième portion.

12. Dispositif (1) selon l'une des revendications précédentes, dans lequel un moyen formant ressort se trouve entre au moins deux, de préférence plusieurs et plus préférentiellement toutes les unités (100) voisines dans une, plusieurs ou toutes les rangées, ledit moyen formant ressort écartant les unités (100) les unes des autres, et dans lequel le dispositif (1) comporte de préférence au moins un mécanisme de blocage pouvant être libéré, qui peut maintenir la distance entre au moins deux, de préférence plusieurs et plus préférentiellement toutes les unités (100) voisines dans une, plusieurs ou toutes les rangées (30), inférieure à une distance maximale définie.

13. Dispositif (1) selon l'une des revendications précédentes, dans lequel les moyens de liaison (150) sont prévus pour être reliés à demeure et/ou solidement et/ou d'un seul tenant à une ou plusieurs unités (100).

14. Dispositif (1) selon l'une des revendications précédentes, dans lequel le dispositif (1) comporte un mécanisme d'actionnement (300), au moyen duquel la position de toutes les unités (100) dans au moins une rangée (30), ou la position de toutes les unités (100) dans plusieurs rangées (30) peut être modifiée et déterminée conjointement.
